# EUROPÄISCHE PATENTSCHRIFT

(11) **EP 4 126 580 B1**
(45) Veröffentlichungstag und Bekanntmachung des Hinweises auf die Patenterteilung: **24.01.2024**
(21) Anmeldenummer: 21717330.1
(22) Anmeldetag: 25.03.2021
(51) Int. Cl.: B60K 7/00, B60K 1/04, B62D 7/04, B62D 11/04, B62D 11/20, B60B 33/00, B60B 33/04, B60B 35/00

(54) **EIGENSICHERE MODULARE ANTRIEBSTECHNIK FÜR OMNIDIREKTIONALES FAHREN IN DER EBENE**
INTRINSICALLY SAFE MODULAR DRIVE TECHNOLOGY FOR OMNIDIRECTIONAL DRIVING IN THE PLANE
TECHNOLOGIE D'ENTRAÎNEMENT MODULAIRE À SÉCURITÉ INTRINSÈQUE POUR LE DÉPLACEMENT OMNIDIRECTIONNEL DANS LE PLAN

(30) Priorität: 25.03.2020 DE 202020101616 U
(43) Veröffentlichungstag der Anmeldung: 08.02.2023
(73) Patentinhaber: Speciaal Machinefabriek Ketels v.o.f., 5151 BD Drunen (NL)
(72) Erfinder: Ketels, Adrianus Marinus Cornelius Hendrikus, 5151 MT Drunen (NL)
(74) Vertreter: ERNICKE Patent- und Rechtsanwälte PartmbB
(86) Internationale Anmeldenummer: PCT/EP2021/057757
(87) Internationale Veröffentlichungsnummer: WO 2021/191357

(56) Entgegenhaltungen:
- WO-A1-2012/048750
- DE-A1-102013 019 726
- DE-A1-102014 202 033
- DE-B4-102014 202 033

## Beschreibung

Die vorliegende Offenbarung betrifft eine Antriebstechnik für das omnidirektionale Bewegen in der Ebene. Die Antriebstechnik umfasst zumindest eine Antriebsvorrichtung sowie eine Antriebsplattform, die mit mindestens einer offenbarungsgemäßen Antriebsvorrichtung ausgestattet ist. Die Antriebstechnik ist dazu vorgesehen und ausgebildet, ein Objekt anzutreiben, an welchem die Antriebsvorrichtung oder die Antriebsplattform befestigbar oder befestigt ist.

Aus DE 10 2009 058 213 B4 ist ein Transportsystem mit einer rechteckigen Transportplattform bekannt und mehreren Antriebseinheiten zum Antrieb der Transportplattform bekannt. Jede Antriebseinheit umfasst zwei koaxial angeordnete Antriebsräder, die jeweils mit einem eigenen Motor antreibbar und an einem Fahrgestell drehbar gelagert sind. Das Fahrgestell ist über eine aufrecht stehende Lenkachse direkt mit der Transportplattform verbunden. Die Lenkachse und die Drehachsen der Antriebsräder kreuzen sich, sodass ein gegenläufiges Antreiben der Antriebsräder dazu führt, dass das Fahrgestell um die Lenkachse gedreht wird. Alle Antriebseinheiten verfügen über eine gemeinsame Steuereinrichtung, mit der sie verbunden sind.

Eine baugleiche Antriebseinheit ist in WO 2012/048750 A1 offenbart. Dort sind zwei separat ansteuerbare Antriebsräder an einem Fahrgestell befestigt, das um eine aufrecht stehende Lenkachse drehbar ist. Die Lenkachse schneidet die gemeinsame Radachse der Antriebsräder. Die Lenkachse und die mindestens zwei Antriebsräder sind ferner derart angeordnet, dass durch ein gegenläufiges Drehen der mindestens zwei Antriebsräder relativ zum Untergrund eine Schwenkung eines Fahrgestells um die Lenkachse erzeugt wird. Die Lenkachse verläuft mittig zwischen den Antriebsrädern. Wenn die Antriebseinheit an einer Transportplattform angeordnet ist, ist ein gegenläufiges Antreiben der Antriebsräder möglich, wodurch das Fahrgestell orientiert bzw. ausgerichtet wird, allerdings ohne die Transportplattform zu bewegen.

Aus DE 10 2014 202 033 A1 ist ein Fahrgestell für ein Bett mit einem sogenannten Mecanum-Rad bekannt. DE 10 2013 019 726 A1 offenbart ein Fahrzeug omnidirektionalen Radantrieben, deren Funktionsweise analog zu den Antriebseinheiten nach WO 2012/048750 A1 gebildet ist.

Aus DE 199 49 351 A1 ist ein Aufbau von Radmodulen mit angetriebener Lenkachse und angetriebener Radachse bekannt, wobei die Antriebe für die Lenkbewegung und die Raddrehung jeweils über durch entfernte Motoren erfolgen, die mittels Getriebe angebunden sind.

DE 20 2013 011 728 U1, DE 20 2015 103 603 U1, DE 21 2017 000 162 U1 sowie AT 519 463 A4 offenbaren weitere Antriebe, bei denen zwei koaxial angeordnete Räder an einem Träger angeordnet ist, welcher um eine Lenkachse drehbar ist, die die gemeinsame Radachse schneidet.

Die bisher bekannten Antriebstechniken für omnidirektionales Fahren in der Ebene sind nicht optimal ausgebildet, sie bieten insbesondere keine ausreichende Einsatzsicherheit in belebten Räumen, für die gehobene Ansprüche an die Evakuierbarkeit bestehen, wie beispielsweise Krankenhäuser oder öffentliche Gebäude.

Es ist Aufgabe der vorliegenden Erfindung, eine verbesserte Antriebstechnik aufzuzeigen. Die Erfindung löst diese Aufgabe durch die kennzeichnenden Merkmale der eigenständigen Ansprüche.

Eine Antriebsvorrichtung gemäß der vorliegenden Offenbarung weist besondere Vorteile für den sicheren Betrieb in Umgebungen auf, in denen ein Kontakt des angetriebenen Objektes mit Menschen stattfinden kann. Bei dem angetriebenen Objekt kann es sich beispielsweise um eine Transportplattform, eine Maschine, eine Bewegungsplattform für einen Roboter oder um beliebige andere Objekte handeln.

Die Antriebstechnik gemäß der vorliegenden Offenbarung kann bevorzugt eingesetzt werden, um medizinisches Gerät oder Lasten zumindest zeitweise im Behandlungsbereich eines Krankenhauses zu bewegen. In solchen Umgebungen ist es einerseits wichtig, dass durch die angetriebene Bewegung des Objekts keine Unfälle mit Personenschäden verursacht werden. Andererseits sollte das bewegbare Objekt im Fall einer Evakuierung von unkundigen Personen aus dem Fluchtweg oder einer Räumungszone entfernbar sein. Die offenbarte Antriebstechnik trägt bevorzugt beiden Bedürfnissen Rechnung, indem sie dazu ausgebildet ist, im angetriebenen Zustand und/oder im passiven Zustand durch eine von außen aufgebrachte Kraft rücktreibbar oder gesteuert ausweichfähig ist. Im Gebiet der Robotik ist für die Rücktreibbarkeits- oder gesteuerte Ausweichfähigkeits-Funktion der Begriff "backdrivability" etabliert.

Die Antriebstechnik gemäß der vorliegenden Offenbarung bietet ein eigen-sicheres Antriebskonzept, das zumindest eine passive Rücktreibbarkeits-Funktion und bevorzugt zusätzlich eine gesteuerte Ausweichfähigkeits-Funktion umfasst.

Eine Antriebsvorrichtung gemäß der vorliegenden Offenbarung umfasst einen Schwenkradträger mit einer aufrechten Lenkachse. Der Schwenkradträger ist frei um die Lenkachse drehbar. Bevorzugt wird der Schwenkradträger über die Lenkachse direkt oder indirekt mit einem anzutreibenden Objekt verbunden. Die Lenkachse bildet somit die wesentliche Lagerstelle, an der die von der Antriebsvorrichtung erzeugte Antriebswirkung mechanisch auf das zu bewegende Objekt und insbesondere eine Antriebsplattform übertragen wird.

Die Antriebsvorrichtung umfasst weiterhin eine im Wesentlichen horizontale Radachse, die am Schwenkradträger angeordnet ist. Die Radachse ist durch einen Nachlaufversatz gegenüber der aufrechten Lenkachse windschief versetzt angeordnet. Durch diesen Nachlaufversatz wird die passive Rücktreibbarkeits-Funktion gefördert. Wenn von außen eine Kraft auf das bewegte Objekt oder die Antriebsplattform ausgewirkt wird, wird zumindest ein Teil dieser Kraft über die Lenkachse auf die Antriebsvorrichtung übertragen. Aufgrund des Nachlaufversatzes bewirkt diese an der Lenkachse angreifende Kraft, sofern ihr horizontaler Kraftanteil nicht exakt senkrecht zur Radachse verläuft, ein Drehmoment, das den Schwenkradträger zu einer Neuausrichtung drängt.

Die Antriebsvorrichtung umfasst weiterhin ein erstes Antriebsrad und ein zweites Antriebsrad, die um die Radachse drehbar und zueinander benachbart angeordnet sind. Durch die benachbarte Anordnung der Antriebsräder wird gemäß der Momentanpol-Lehre eine Randbedingung für die Beweglichkeit des Schwenkradträgers erzeugt. Der Schwenkradträger kann Rotationsanteile seiner Bewegung nur um einen Momentanpol ausführen, der auf der Radachse liegt.

Das vorgenannte Drehmoment, das gemäß der obigen Erläuterung aus einer von außen einwirkenden Kraft hervorgeht, drängt den Schwenkradträger im passiven Zustand in eine Nachlauforientierung, bei der der Nachlaufversatz parallel zur Einwirkungsrichtung der externen Kraft ausgerichtet ist und die Radachse hinter der Lenkachse nachläuft.

Die Antriebsvorrichtung gemäß der vorliegenden Offenbarung ist wegen des vorgenannten Effektes durch eine Kraft, die an dem anzutreibenden Objekt oder (direkt oder mittelbar) an der Lenkachse von außen einwirkt, in jede beliebige Richtung in der Ebene schiebbar und somit omnidirektional ausweichfähig.

Die offenbarte Antriebsvorrichtung weist mindestens zwei Radantriebe auf sowie eine Bewegungsregelung, die dazu ausgebildet ist, die Antriebsvorrichtung in eine beliebige Richtung in der Horizontalebene zu bewegen, indem die Radbewegungen des ersten und des zweiten Antriebsrades gesteuert werden.

Durch die gesteuerte Radbewegung kann die Antriebsvorrichtung omnidirektional in der Ebene verfahren werden. Die oben erläuterten Kräftebeziehungen zwischen den Antriebsrädern bzw. der Radachse einerseits und der Lenkachse andererseits gelten bei der angetriebenen Fahrbewegung in umgekehrtem Sinn. Durch eine geeignete Wahl der Radbewegungen kann somit im Bereich der Lenkachse eine beliebige Antriebskraft auswirkt werden, durch die der anzutreibende Körper bzw. eine Antriebsplattform omnidirektional in der Ebene verfahrbar ist.

Die Radantriebe sind bevorzugt selbsthemmungsfrei ausgebildet, sodass das erste und das zweite Antriebsrad im passiven / stromfreien Zustand des Radantriebs frei um die Radachse drehbar sind. Die Radantriebe sind bevorzugt weiterhin dazu ausgebildet, die jeweils anzutreibenden Antriebsräder in einer bestimmten Drehlage zu halten, zu beschleunigen oder abzubremsen.

Die omnidirektionale Verfahrbarkeit der Antriebsplattform bzw. des anzutreibenden Objekts folgt aus der separaten Antreibbarkeit der Antriebsräder mit gleichen oder unterschiedlichen Geschwindigkeiten sowie gleichen oder unterschiedlichen Drehrichtungen. Wenn die beiden Antriebsräder gleichsinnig und mit gleicher Geschwindigkeit bewegt werden, wird die Antriebsvorrichtung mit einer reinen Translation bewegt. Die Richtung, in der sich die Antriebsvorrichtung bei reiner Translation bewegt, wird nachfolgend als Vorausrichtung bezeichnet. Die Vorausrichtung verläuft senkrecht zur Radachse. Der Verlauf der Radachse ist für die Beschreibung der Bewegung der Antriebsvorrichtung die Querachse.

Wenn die Antriebsräder in gegenläufiger Richtung und mit gleichen Geschwindigkeiten angetrieben werden, wird die Antriebsvorrichtung mit einer reinen Rotation um einen Momentanpol bewegt, der in der Mitte zwischen den Aufstandspunkten der Antriebsräder liegt. Oberhalb davon liegt der Mittelpunkt der Radachse. Nachfolgend wird zur Vereinfachung der Beschreibung die Lage von Momentanpolen nur hinsichtlich der horizontalen Lage beschrieben. Bei der reinen Rotation liegt nach dieser Beschreibungsart der Momentanpol im Mittelpunkt der Radachse.

Werden die Antriebsräder mit unterschiedlichen Geschwindigkeiten angetrieben, wird die Antriebsvorrichtung in einer Kurvenbahn bewegt, sodass sich translatorische und rotatorische Bewegungsanteile überlagern. Jede Bewegung der Antriebsvorrichtung ist über die Lehre der Momentanpole in Bewegungen der Antriebsräder umrechenbar und umgekehrt. Der Momentanpol der Bewegung liegt - in der Draufsicht und soweit beide Räder Haftung auf dem Untergrund haben - auf der Radachse, kann aber gegenüber dem Mittelpunkt der Radachse gemäß dem Verhältnis der Einzel-Radgeschwindigkeiten nach links oder rechts außen verschoben sein.

Die offenbarungsgemäße Antriebstechnik ermöglicht somit eine Kombination von angetriebener omnidirektionaler Verfahrbarkeit und passiver omnidirektionaler Beweglichkeit. Durch die gesteuerte Radbewegung des ersten und zweiten Antriebsrads ist somit eine omnidirektionale Bewegung der Antriebsvorrichtung in der Ebene erzeugbar. Andererseits kann sich die Antriebsvorrichtung in Folge der Ausbildung des Schwenkradträgers und des Nachlaufversatzes durch Aufbringen einer äußeren Kraft in eine beliebige Richtung bewegen lassen, wobei die äußere Kraft in der Regel an dem angetriebenen Objekt angreift und über die Lenkachse auf die Antriebsvorrichtung übertragen wird. Durch die frei drehbare Anordnung des Schwenkradträgers kann dieser eine Nachlaufstellung gegenüber einer aus der externen Kraft resultierenden Versatzbewegung des Objekts einnehmen, wie dies beispielsweise beim Schieben von Bürostühlen mit Nachlaufrollen bekannt ist.

Die Antriebsvorrichtung gemäß der vorliegenden Offenbarung ist somit sowohl aktiv als auch passiv omnidirektional in der Ebene bewegbar.

Die offenbarte Antriebsvorrichtung ist bevorzugt modular ausgebildet. Die betrifft einerseits den körperlichen Aufbau und/oder andererseits die Steuerbarkeit. Hinsichtlich der Steuerbarkeit wird zwischen einer Globalbewegung und einer Regionalbewegung unterschieden. Die Globalbewegung betrifft die Gesamtbewegung des anzutreibenden Objektes bzw. einer offenbarungsgemäßen Antriebsplattform. Die Regionalbewegung betrifft die Einzelbewegung einer Antriebsvorrichtung.

Die Globalbewegung kann anhand von beliebigen Positions- und Orientierungsparametern für die Antriebsplattform oder das anzutreibende Objekt beschrieben werden. Es ist zweckmäßig, für diese Global-Bewegungsparameter ein Global-Koordinatensystem zu wählen. Die Regionalbewegung einer Antriebsvorrichtung kann anhand von weiteren Positions- oder Orientierungsparametern für die Antriebsvorrichtung beschrieben werden. Es ist zweckmäßig, für die Regional-Bewegungsparameter ein Regional-Koordinatensystem zu wählen. Dessen Ursprung und Ausrichtung kann beliebig gewählt werden. In der nachfolgenden Beschreibung wird davon ausgegangen, dass der Ursprung des Regional-Koordinatensystems im Mittelpunkt der Radachse liegt, wobei Vorausrichtung und Querrichtung gemäß den obigen Definitionen festgelegt sind.

Alle Bewegungen können zwischen dem Regional-Koordinatensystem und dem Global-Koordinatensystem anhand einer bekannten Geometrie der Antriebsvorrichtung und der Antriebsplattform beziehungsweise der Anordnung der Antriebsvorrichtungen an dem anzutreibenden Objekt umgerechnet werden, wenn zusätzlich eine momentane Drehlage der Antriebsvorrichtung in Bezug auf die Lenkachse gegenüber der Antriebsplattform beziehungsweise dem anzutreibenden Objekt bekannt ist oder erfasst wird. Wie weiter unten ausgeführt wird, weist die Antriebsvorrichtung und/oder die Antriebsplattform bevorzugt eine Lenkwinkelüberwachung auf, um diese Drehlage zu ermitteln.

Die Bewegungsregelung der Antriebsvorrichtung ist bevorzugt dazu ausgebildet, eine Soll-Bewegung des ersten und des zweiten Antriebsrads in Abhängigkeit von einer bekannten Geometrie der Antriebsräder sowie in Abhängigkeit der bekannten Relativlage der Radachse und der Lenkachse zu berechnen, und zwar derart, dass die Soll-Bewegungen der Antriebsräder mit einer Soll-Bewegung der Antriebsvorrichtung korrespondieren. Es ist somit ausreichend, der Antriebsvorrichtung Steuerparameter für eine Soll-Bewegung der gesamten Antriebsvorrichtung zu übermitteln, welche dann automatisch in geeignete Soll-Bewegungen der Antriebsräder umgesetzt werden. Hierdurch wird in der Steuerlogik eine Modul-Grenze zwischen der inneren Bewegungslogik der Antriebsvorrichtung (regionale Bewegungsregelung) und der äußeren Bewegungslogik des angetriebenen Objektes (globale Bewegungsregelung) geschaffen. In der Bewegungsregelung der Antriebsvorrichtung sind bevorzugt geeignete Datenstrukturen vorhanden, in welchen die Geometrie der Antriebsräder sowie die Relativlage der Radachse und der Längsachse in computerlesbarer Form abgelegt sind.

Die Antriebsvorrichtung weist bevorzugt eine (körperliche) Modul-Schnittstelle auf, die eine Daten-Schnittstelle und/oder eine Laststrom-Schnittstelle und/oder eine mechanische Befestigungsstruktur umfasst. Die Modul-Schnittstelle ist bevorzugt dazu ausgebildet, die Antriebsvorrichtung an einer gegengleich ausgebildeten Modulaufnahme des anzutreibenden Objekts zu befestigen. Durch das Schließen der Modulverbindung werden bevorzugt parallel mindestens zwei Modulverbindungen hergestellt, insbesondere eine Daten-Verbindung und/oder eine Laststromverbindung und/oder eine Befestigungsverbindung. Die Antriebsvorrichtung kann bevorzugt einen Flanschkörper aufweisen, der in Bezug auf die Lenkachse drehbar mit dem Schwenkradträger verbunden ist. Die Daten-Schnittstelle und/oder die Laststrom-Schnittstelle und/oder die mechanische Befestigungsstruktur können bevorzugt einzeln oder gemeinsam an dem Flanschkörper vorgesehen sein und die Modul-Schnittstelle bilden.

Die Bewegungsregelung der Antriebsvorrichtung weist bevorzugt mindestens zwei Bewegungsmodi auf. Bevorzugt sind drei oder mehr Bewegungsmodi möglich. Die Bewegungsregelung ist bevorzugt zeitweise in dem einen oder anderen Bewegungsmodus betreibbar.

Ein erster Bewegungsmodus kann ein Zwangs-Bewegungsmodus sein, in welchem die Antriebsvorrichtung gemäß einer vorgegebenen Soll-Bewegung gesteuert bewegt wird, und zwar unter Ausnutzung der vollen Antriebsleistung.

Ein zweiter Bewegungsmodus kann ein nachgiebiger Bewegungsmodus sein, in welchem die Antriebsvorrichtung derart gesteuert bewegt wird, dass die Ist-Bewegung der Antriebsvorrichtung einer vorgegebenen Soll-Bewegung angenähert wird, allerdings nur innerhalb eines vorgegebenen Maximalwerts für die Antriebsleistung.

Der Maximalwert definiert dabei eine Antriebsleistung, die geringer ist als die volle Antriebsleistung. Mit anderen Worten ist der Maximalwert ein Grenzwert, der eine eingeschränkte Antriebsleistung charakterisiert.

Ein dritter Bewegungsmodus kann ein Ausweich-Bewegungsmodus sein, in welchem die Ist-Bewegung der Antriebsvorrichtung einer festgestellten und von außen einwirkenden Kraft durch gesteuerte Bewegung des ersten und/oder zweiten Antriebsrads nachfolgt, insbesondere unter teilweiser oder vollständiger Abkehr von einer vorgegebenen Soll-Bewegung für die Antriebsvorrichtung.

Der nachgiebige Bewegungsmodus und der Ausweich-Bewegungsmodus haben besondere Relevanz für das Sicherheitskonzept. In dem nachgiebigen Bewegungsmodus kann ein solcher Maximalwert vorgesehen sein, dass ein Mensch, der etwaig mit dem angetriebenen Objekt in Kollision gerät, das Objekt und damit die Antriebsvorrichtung abbremsen oder aufhalten kann, sodass Beschädigungen oder Verletzungen vermieden werden.

In dem Ausweich-Bewegungsmodus kann die angetriebene Bewegung der Antriebsvorrichtung, die beispielsweise von einem Menschen durch Wegschieben, das heißt durch eine externe Kraft ausgelöste Ausweichbewegung, zusätzlich unterstützen.

Ein Umschalten zwischen den Bewegungsmodi kann auf beliebige Weise erfolgen. Insbesondere kann ein Umschalten von dem nachgiebigen Bewegungsmodus in den Ausweich-Bewegungsmodus in Abhängigkeit von der erfassten externen Kraft erfolgen, beispielsweise wenn die externe Kraft in ihrer Höhe und/oder hinsichtlich der Dauer der Aufbringung einen vordefinierten Kraft-Höhe-Grenzwert oder Kraft-Aufbringungsdauer-Grenzwert überschreitet. Alternativ oder zusätzlich können weitere Parameter für das Umschalten ausgewertet werden.

Eine Antriebsplattform gemäß der vorliegenden Offenbarung ist zur Bereitstellung einer angetriebenen omnidirektionalen Beweglichkeit in der Ebene ausgebildet und umfasst mindestens eine Antriebsvorrichtung nach einem der vorhergehenden Ansprüche. Die Antriebsplattform kann fest oder lösbar mit dem anzutreibenden Objekt verbunden sein. Insbesondere kann das anzutreibende Objekt kraft- oder formschlüssig an der Antriebsplattform befestigt sein. Weiterhin kann die Antriebsplattform mit dem anzutreibenden Objekt integriert sein.

Die Antriebsplattform umfasst bevorzugt eine Plattform-Bewegungssteuerung, die dazu ausgebildet ist, eine Soll-Bewegung für die mindestens eine Antriebsvorrichtung vorzugeben. Bevorzugt ist die Plattform-Bewegungssteuerung mit zwei oder mehr Antriebsvorrichtungen verbunden. Sie kann entsprechend eine Soll-Bewegung für die zwei oder mehr Antriebsvorrichtungen vorgeben. Weiter bevorzugt kann die Plattform-Bewegungssteuerung eine globale Bewegungsregelung für die Bewegung der Plattform ausführen. Sie kann hierbei die Ist-Bewegung der Plattform ermitteln und Steueranweisungen für die Soll-Bewegung der einen, zwei oder mehr Antriebsvorrichtungen derart ausgeben, dass die Ist-Bewegung der Plattform einer Soll-Bewegung der Plattform angenähert wird. Hierzu kann sie bevorzugt einen oder mehrere Parameter zur Beschreibung der Ist-Bewegung der mindestens einen und bevorzugt mehreren Antriebsvorrichtungen beziehen. Aus diesen Parametern kann sie die Ist-Bewegung der Plattform direkt oder indirekt berechnen.

In der Plattform-Bewegungssteuerung wird somit die vollständige äußere Bewegungslogik für die GlobalBewegung der Plattform abgebildet und in jeweilige Steuerbefehle für die Antriebsvorrichtungen umgesetzt. An den Antriebsvorrichtungen wird über die dortige Bewegungsregelung eine Umsetzung in die konkreten Steuersignale für die Radantriebe vorgenommen.

In den Unteransprüchen, der nachfolgenden Beschreibung sowie den beigefügten Zeichnungen sind weitere vorteilhafte Ausbildungen der offenbarten Antriebstechnik angegeben.

Die Erfindung ist in den Zeichnungen beispielhaft und schematisch dargestellt. Diese zeigen:
- Figuren 1-4:: eine bevorzugte Ausführungsvariante der offenbarungsgemäßen Antriebsvorrichtung;
- Figuren 5-7:: verschiedene Ausführungsformen einer Antriebsplattform gemäß der vorliegenden Offenbarung;
- Figuren 8-10:: Erläuterungsdarstellungen zu verschiedenen Bewegungsmodi der Antriebsvorrichtung und der Antriebsplattform;
- Figuren 11 u. 12:: Funktionsskizzen zur Erläuterung einer Kipplagerung mit Koppelgetriebe.

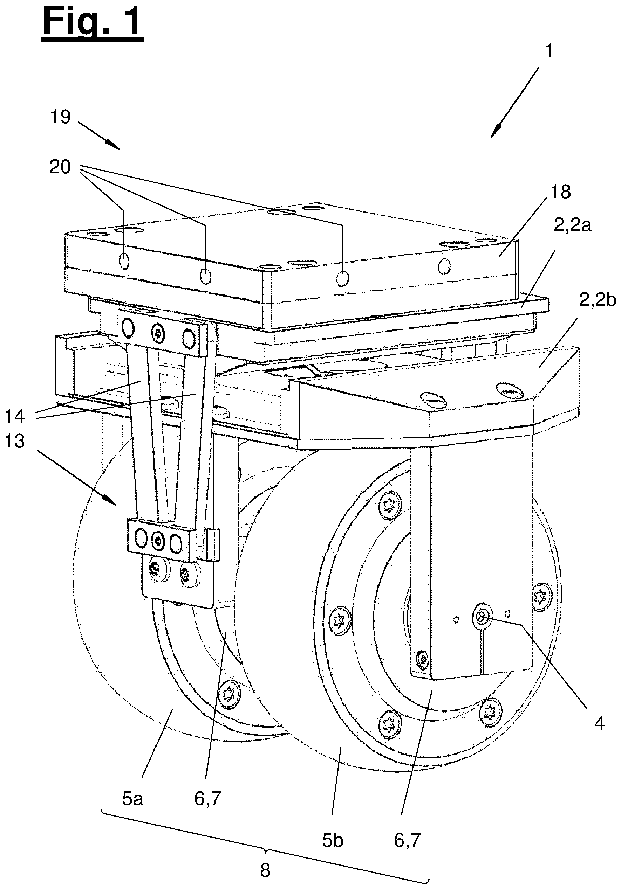

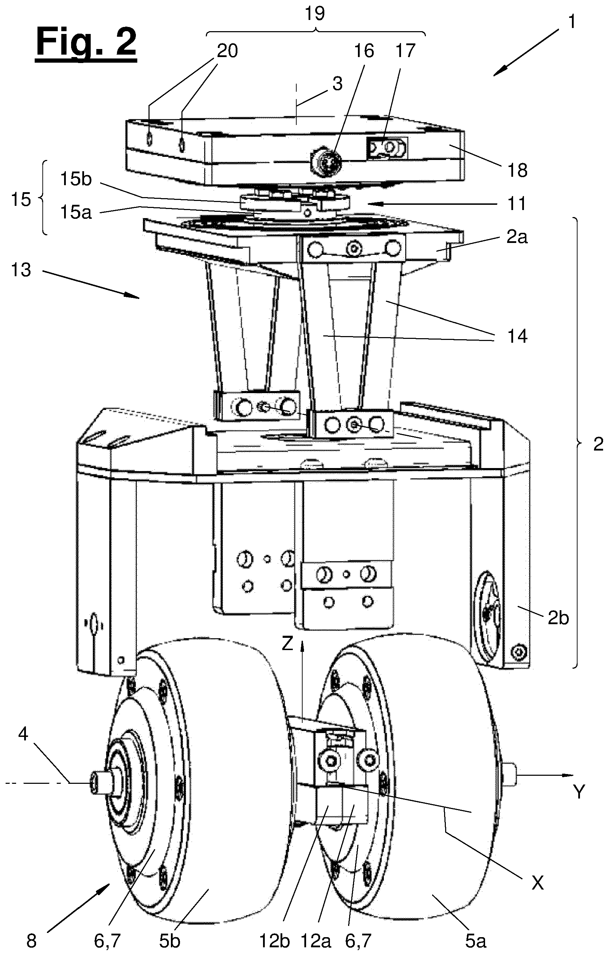

Figuren 1 und 2 zeigen eine bevorzugte Ausbildung der Antriebsvorrichtung in perspektivischer Darstellung, einmal im Zusammenbau und einmal in einer Explosionsdarstellung.

Die Antriebsvorrichtung (1) weist einen Schwenkträger (2) auf. Dieser kann ein- oder mehrteilig ausgebildet sein. Bevorzugt umfasst der Schwenkträger einen Lenkerabschnitt (2a), an dem die Lenkachse (3) angeordnet ist, und einen Radträgerabschnitt (2b), an welchem die Radachse (4) angeordnet ist.

Die Antriebsräder (5a,5b) sind in einer koaxialen Radanordnung und insbesondere in einer koaxialen Doppel-Radanordnung (8) vorgesehen. Die Ausbildung der Antriebsräder (5a,5b) kann beliebig gewählt sein. Bevorzugt haben die Antriebsräder (5a,5b) eine übereinstimmende Ausbildung. Ferner haben die Antriebsräder (5a,5b) bevorzugt eine Ausbildung als Rolle oder Tonnenrad.

Der motorische Antrieb der Antriebsräder (5a,5b) kann auf beliebige Weise erfolgen. Bevorzugt ist der Radantrieb (6) eines und insbesondere jeden Antriebsrads (5a,5b) als getriebeloser Direktantrieb ausgebildet. Die Getriebelosigkeit hat Vorteile einerseits für eine direkte und möglichst schlupffreie Kraftübertragung, so dass die gesteuerte Bewegung der Räder entsprechend in die gewünschte Bewegung der Antriebsvorrichtung (1) umgesetzt wird. Mit anderen Worten erhöht die Verwendung eines Direktantriebs die Regelungsgenauigkeit, so dass eine Ist-Bewegung (MD`) der Antriebsvorrichtung (1) möglichst exakt bereits durch reinen Steuereingriff der angestrebten Soll-Bewegung (MD*) der Antriebsvorrichtung (1) entspricht.

Ein Radantrieb (6) kann weiterhin bevorzugt als Nabenantrieb (7) ausgebildet sein, insbesondere als Naben-Direktantrieb. Hierdurch wird eine besonders kompakte Ausbildung der Antriebsvorrichtung (1) erreicht. Es ist insbesondere nicht erforderlich, in Richtung der Radachse (4) außerhalb der Antriebsräder (5a,5b) raumgreifende Strukturen für die Unterbringung eines Getriebes und/oder eines separaten Motors vorzusehen.

Wie oben beschrieben wurde, ist die Bewegungsregelung (10) der Antriebsvorrichtung (1) bevorzugt dazu ausgebildet, mind. zwei und insbesondere drei oder mehr Bewegungsmodi aufzuweisen und in diesem Bewegungsmodi jeweils zeitweise betrieben zu werden.

Die Bewegungsregelung (10) kann vorrichtungstechnisch in beliebiger Weise ausgebildet sein. Bevorzugt ist die Bewegungsregelung (10) durch eine elektronische Steuereinheit gebildet oder verkörpert. Die elektronische Steuereinheit ist gemäß einer bevorzugten Ausführung als an der Antriebsvorrichtung (1) angeordnet. Sie kann aus einer einzigen Baueinheit bestehen. Alternativ kann die elektronische Steuereinheit auf zwei oder mehr Baueinheiten verteilt sein. Die zwei oder mehr Baueinheiten der elektronischen Steuereinheit können eine verteilte Anordnung haben. Sie können teilweise oder vollständig an der Antriebsvorrichtung (2) angeordnet sind. Besonders vorteilhaft ist die Anordnung der elektronischen Steuereinheit oder ihrer Baueinheiten am Lenkerabschnitt (2a) und/oder am Radträgerabschnitt (2b) der Antriebsvorrichtung. Alternativ oder zusätzlich ist eine (teilweise oder vollständige) Anordnung der elektronischen Steuereinheit oder ihrer mindestens einen Baueinheit am Flanschkörper (18) möglich.

Die elektronische Steuereinheit kann einerseits Steuerbefehle an die Radantriebe (6) geben und andererseits Sensordaten in Bezug auf die Radbewegungen und/oder Antriebsreaktionen an oder in den Radantrieben (6) beziehen. Die Steuerinformationen können beliebig gewählt sein.

Gemäß einer bevorzugten Variante ist die Bewegungsregelung (10) dazu ausgebildet, das erste und/oder das zweite Antriebsrad (5a,5b) mit einer Drehmomentregelung und/oder mit einer Geschwindigkeitsregelung anzutreiben.

Bei einer Drehmomentregelung wird ein Soll-Drehmoment vorgegeben und mit einem erzeugten Ist-Drehmoment verglichen. Das Ist-Drehmoment kann beispielsweise aus einer Messung der Antriebsströme des jeweiligen Radantriebs (6) ermittelt werden. Auch hierbei ist es vorteilhaft, einen Direktantrieb zu verwenden, weil dann die Motorströme eine maximale Kongruenz zum mechanischen Drehmoment aufweisen.

Bei einer Geschwindigkeitsregelung wird eine Soll-Geschwindigkeit vorgegeben und mit einer sich ergebenden Ist-Geschwindigkeit verglichen. Die Ist-Geschwindigkeit kann auf beliebige Weise erfasst werden.

Die Antriebsvorrichtung (1) weist bevorzugt eine Radrotationsüberwachung (12a,12b) auf, die dazu ausgebildet ist, eine Drehlage und/oder eine Drehgeschwindigkeit und/oder eine Drehbeschleunigung eines Antriebsrads (5a,5b) zu erfassen. Weiterhin ist bevorzugt für das erste und das zweite Antriebsrad (5a,5b) jeweils eine separate Radrotationsüberwachung (12a,12b) vorgesehen. Die Radrotationsüberwachung kann beispielsweise durch einen Encoder gebildet sein.

Eine Drehmomentregelung und eine Geschwindigkeitsregelung können alternativ zueinander oder parallel und bevorzugt in einem Kaskaden-Verhältnis genutzt sein. Dabei kann insbesondere die Drehmomentregelung Priorität vor einer Geschwindigkeitsregelung haben.

Die Bewegungsregelung (10) der Antriebsvorrichtung (1) ist bevorzugt dazu ausgebildet, für das erste und/oder das zweite Antriebsrad (5a,5b) und/oder deren Radantriebe (6) einen Maximalwert festzulegen, durch den die Antriebsleistung beschränkt ist. Es können auch zwei oder mehr Maximalwerte festgelegt werden, die gleichzeitig oder alternativ zueinander genutzt werden. Ein Maximalwert kann beispielsweise ein maximaler Stromwert oder ein maximaler Drehmomentwert oder ein maximaler Geschwindigkeitswert sein.

Gemäß einer bevorzugten Ausbildung ist die Bewegungsregelung (10) dazu ausgebildet, zwei Maximalwerte festzulegen, insbesondere einen Drehmomentwert als ersten Maximalwert und ein Geschwindigkeitswert als zweiten Maximalwert. Die Bewegungsregelung (10) ist ferner dazu ausgebildet, die Bewegung der Antriebsvorrichtung (1) gemäß einer Priorisierung dieser Maximalwerte zu steuern, bei der die Einhaltung des Drehmoment-Maximalwert eine höhere Priorität hat als die Einhaltung des Geschwindigkeit-Maximalwerts. Alternativ kann eine andere Priorisierung vorgesehen sein.

Die Bewegungsregelung (10) der Antriebsvorrichtung (1) ist dazu ausgebildet, aus einem oder mehreren bezogenen Parametern oder bezogenen Sensordaten sowie aus einer bekannten Geometrie der Antriebsräder und einer bekannten Relativlage der Radachse (4) und der Lenkachse (3) eine Ist-Bewegung (MD`) der Antriebsvorrichtung (1) zu ermitteln und zwar insbesondere bezogen auf eine Positionsänderung sowie eine Drehlagenänderung der Lenkachse (3) über der Fahrebene. Mit anderen Worten kann die Bewegungsregelung (10) aus den erfassten Ist-Bewegungen (MW`) der Antriebsräder (5a,5b) und der bekannten Geometrie die Ist-Bewegung (MD`) der Antriebsvorrichtung (1) ermitteln.

Eine erfasste oder ermittelte Ist-Bewegung (MD`) der Antriebsvorrichtung (1) kann bevorzugt über die Daten-Schnittstelle (16) an eine externe Steuereinheit und insbesondere die Plattform-Bewegungssteuerung (32) einer offenbarungsgemäßen Antriebsplattform (30) übermittelt oder für ein Auslesen bereitgestellt werden.

Eine Änderung der Drehlage der Antriebsvorrichtung (1) um die Lenkachse (3) kann auf beliebige Weise festgestellt werden. Relativ zur Fahrebene kann die Änderung rechnerisch aus den ermittelten Ist-Bewegungen (MW`) der Antriebsräder (5a,5b), der Geometrie der Antriebsräder (5a,5b) sowie der Relativlage zwischen Radachse (4) und Lenkachse (3) berechnet werden.

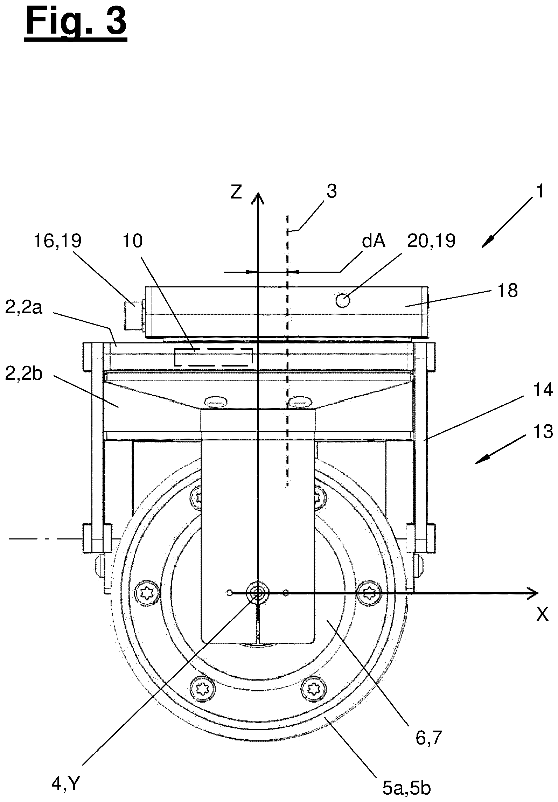

Die Relativlage zwischen Radachse (4) und Lenkachse (3) ist dabei insbesondere durch einen Nachlaufversatz (dA) gekennzeichnet, welcher in Figur 3 dargestellt ist. Die Lenkachse (3) ist bevorzugt um einen horizontalen Versatz gegenüber einem Achsmittelpunkt auf der Radachse (4) zwischen den Antriebsrädern (5a,5b) versetzt. Der horizontale Achsversatz (dA) ist dabei bevorzugt in der Vorausrichtung X (senkrecht zur Radachse (4) und horizontal) angeordnet.

Die vorgenannte geometrische Relativlage von Lenkachse (3) und Radachse (4) beschreibt eine windschiefe und zueinander orthogonale Anordnung dieser Achsen (3,4).

Weiterhin kann die Antriebsvorrichtung (1) eine Lenkrotationsüberwachung (11) aufweisen, die dazu ausgebildet ist, eine Drehlage und/oder eine Drehgeschwindigkeit und/oder eine Drehbeschleunigung des Schwenkradträgers (2) um die aufrechte Lenkachse (3) zu erfassen. Die Erfassung kann auf beliebige Weise erfolgen, insbesondere durch einen Encoder.

Ein Encoder für die Lenkrotationsüberwachung (11) kann denselben oder einen anderen Aufbau haben wie ein Encoder für eine Radrotationsüberwachung (12a,12b).

Bevorzugt kommt für zumindest eine dieser Verwendungen ein Encodersensor zum Einsatz, der eine Absolutwerterfassung bietet. Ein solcher Sensor ist dazu ausgebildet, eine absolute Drehlage in Bezug auf eine Referenz-Winkellage direkt oder indirekt zu erfassen. Die Referenz-Winkellage kann beispielsweise als interner Parameter in der Bewegungsregelung (10) abgelegt sein. Dasselbe gilt für eine Auflösung des Encoders.

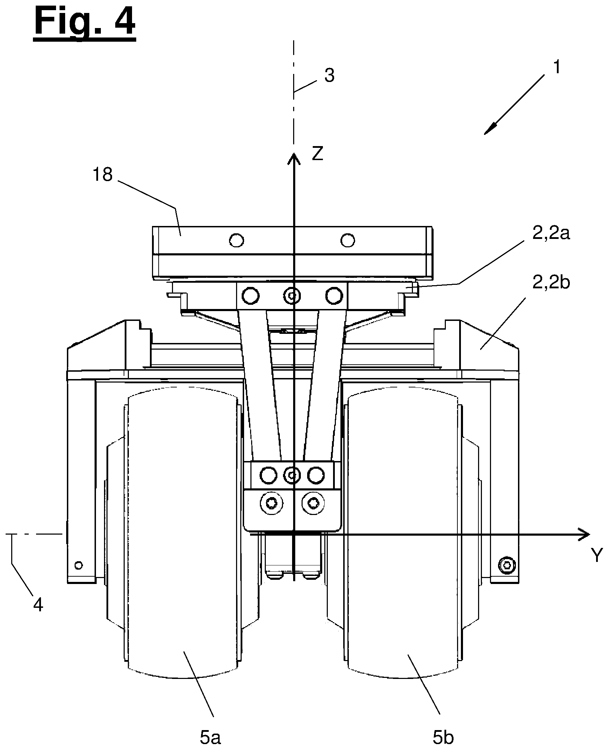

Gemäß einer bevorzugten Ausführung weist die Antriebsvorrichtung (1) einen Flanschkörper (18) auf, der in Figuren 1 bis 4 beispielhaft dargestellt ist. Der Flanschkörper (18) ist in Bezug auf die Lenkachse (3) drehbar mit dem Schwenkradträger (2) verbunden. Die Drehung des Flanschkörpers (18) erfolgt frei, das heißt ungebremst und nicht angetrieben, um die Lenkachse (3). Die Lenkrotationsüberwachung (11) kann eine Drehlage des Schwenkradträgers (2) im Bezug auf den Flanschkörper (18) erfassen.

Die Antriebsvorrichtung (1) gemäß der vorliegenden Offenbarung kann ebenso ohne eine Flanschkörper (18) gebildet sein.

In diesem Fall kann ein entsprechender Anschlussabschnitt des anzutreibenden Objektes und insbesondere einer offenbarungsgemäßen Antriebsplattform (30) als Bezug für die Lenkrotationsüberwachung (11) dienen.

Aus der erfassten oder ermittelten Ist-Bewegung (MD"), die gemäß der obigen Erläuterung in Bezug auf die Lenkachse (3) definiert sein kann, und auf Basis der Lenkrotationsüberwachung (11) kann eine Ist-Bewegung (MP`) der Antriebsplattform (30) bzw. des anzutreibenden Objektes ermittelt werden. Diese Ermittlung kann an beliebiger Stelle erfolgen, beispielsweise in der Bewegungsregelung (10) der Antriebsvorrichtung (1) und/oder in der Plattform-Bewegungssteuerung (32).

Die Antriebsvorrichtung (1) weist bevorzugt eine Daten-Schnittstelle (16) auf, die dazu ausgebildet ist, eine Mehrzahl von Parametern zu übermitteln. Die Übermittlung kann bevorzugt bidirektional stattfinden, d.h. von der Bewegungsregelung (10) der Antriebsvorrichtung (1) zu einer externen Steuerung, insbesondere der Plattform-Bewegungssteuerung (32) und umgekehrt. Die Datenübermittlung kann in einem Push- und/oder in einem Pull-Vorgang erfolgen. Besonders bevorzugt ist die Daten-Schnittstelle (16) als eine Bus-Schnittstelle ausgeführt, insbesondere gemäß dem EtherCAT-Standard. Alternativ können beliebige andere serielle oder parallele Bussysteme Verwendung finden.

Die Daten-Schnittstelle (16) ist bevorzugt dazu ausgebildet, einen oder mehrere Parameter für eine Soll-Bewegung (MD*) der Antriebsvorrichtung (1) zu beziehen. Sie ist weiterhin dazu ausgebildet, einen oder mehrere Parameter zur Beschreibung der Ist-Bewegung (MD`) und insbesondere eines momentanen Ist-Bewegungszustands der Antriebsvorrichtung (1) zur Verfügung zu stellen oder zu übertragen.

Die Datenübermittlung zwischen der Daten-Schnittstelle (16), der Lenkrotationsüberwachung (11) sowie der Radrotationsüberwachung (12a,12b) kann auf beliebige Weise erfolgen, insbesondere durch elektrische Signalübertragung mittels Kabeln oder Leiterbahnen.

Gemäß einer bevorzugten Ausführung weist die Antriebsvorrichtung (1) eine Schleifring-Anordnung (15), die am Schwenkradträger (2) im Bereich der Lenkachse (3) vorgesehen ist. Die Schleifring-Anordnung (15) ist bevorzugt einerseits dazu ausgebildet, Lastströme an der Lenkachse (3) von oder zu einem externen Energiespeicher zu übertragen, insbesondere von oder zu einem elektrischen Energiespeicher (34), der an der Antriebsplattform (30) angeordnet ist. Die Schleifringanordnung (15) kann alternativ oder zusätzlich dazu ausgebildet sein, Datensignale an der Lenkachse (3) von oder zu einer externen Steuerung zu übertragen, insbesondere von und zu der Plattform-Bewegungssteuerung (32). Mit anderen Worten ist die Schleifring-Anordnung (15) dazu ausgebildet, Lastströme und/oder Datensignale über eine Rotationslagerstelle an der Lenkachse (3) zu übertragen.

Gemäß der Darstellung in Figur 2 umfasst die Schleifring-Anordnung (15) bevorzugt einen dorsalen Schleifringteil (15a), der elektrisch leitend mit der Bewegungsregelung und/oder mindestens einen Radantrieb (6) und/oder einer Radrotationsüberwachung (12a,12b) und/oder einer Lenkrotationsüberwachung (11) verbunden ist. Der dorsale Schleifringteil (15a) ist bevorzugt weiterhin drehfest an dem Schwenkradträger (2) und insbesondere an dem Lenkerabschnitt (2a) angeordnet.

Die Schleifring-Anordnung (15) umfasst bevorzugt weiterhin einen distalen Schleifringteil (15b), der elektrisch leitend mit dem dorsalen Schleifringteil (15a) verbunden und in Bezug auf die Lenkachse (3) frei drehbar gegenüber dem Schwenkradträger (2) angeordnet ist. Der dorsale Schleifringteil (15a) sowie der distale Schleifringteil (15b) können jeweils mehrteilig ausgebildet sein und beispielsweise einen Laststrom-Übertragungsabschnitt und einen separaten Datensignal-Übertragungsabschnitt umfassen.

Gemäß einer bevorzugten Ausführung ist der distale Schleifringteil (15b) mit dem Flanschkörper (18) drehfest verbunden. Weiterhin ist der distale Schleifringteil (15b) bevorzugt mit der Daten-Schnittstelle (16) und/oder der Laststrom-Schnittstelle (17) verbunden, die an dem Flanschkörper (18) angeordnet sind. Alternativ können eine Daten-Schnittstelle (16) und/oder eine Laststrom-Schnittstelle (17) ohne Vorhandensein eines Flanschkörpers (18) mit dem distalen Schleifringteil (15b) verbunden sein, beispielsweise durch Anschlusskabel, an denen endseitig die Daten-Schnittstelle (16) und/oder die Laststrom-Schnittstelle (17) als Stecker vorgesehen sind.

Die Antriebsvorrichtung (1) und insbesondere der Schwenkradträger (2) kann gemäß einer bevorzugten Ausführungsvariante eine Kipplagerung (13) aufweisen, die dazu ausgebildet ist, die Radachse (4) gegenüber einer horizontalen Ausrichtung kippbar zu lagern. Die kippbare Lagerung kann insbesondere dazu dienen, Unebenheiten der Fahrbahn durch eine relative Hebe- oder Senkbewegung der Antriebsräder (5a,5b) zu kompensieren. Die Kipplagerung (13) kann in beliebiger Weise gebildet sein.

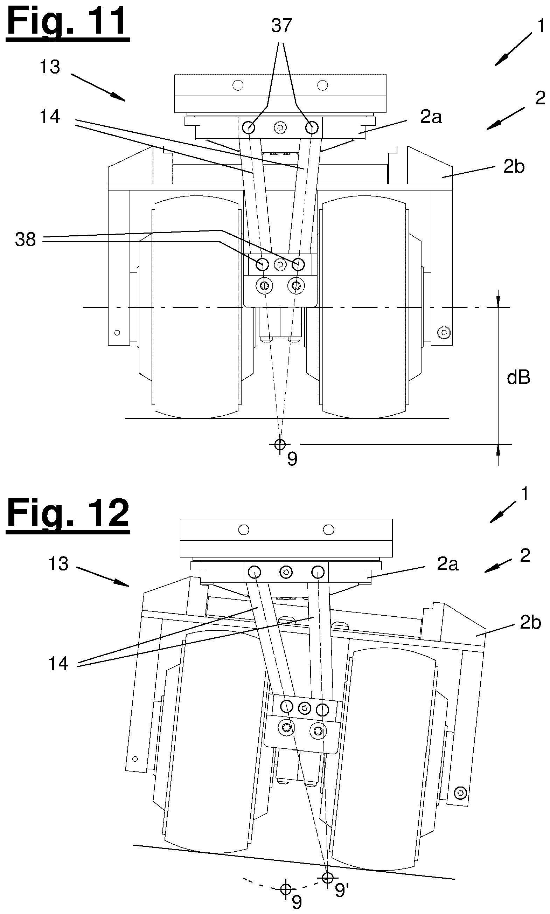

Figuren 11 und 12 erläutern eine bevorzugte Ausführung einer Kipplagerung, die als Koppelgetriebe ausgebildet ist und eine bogenförmig verschiebbare Kippachse (9) aufweist. Das Koppelgetriebe kann insbesondere ein in der Referenzlage symmetrisches Trapez-Viergelenkgetriebe mit zwei beweglichen Kippstützen (14) sein. Alternativ sind andere Formen eines Koppelgetriebes möglich.

Die Kippachse (9) kann verschieblich angeordnet sein. Sie beschreibt den Momentanpol einer (zumindest infinitesimalen) Kippbewegung der Radachse (4) bzw. der Antriebsräder (5a, 5b). Sie bewegt sich bevorzugt auf einem bogenförmigen Versatzweg (36), der durch die Kinematik des Koppelgetriebes definierbar ist. Die Kinematik des Koppelgetriebes ergibt sich wiederum aus der Geometrie seiner Lagerpunkte (37, 38) und Stützen. Je nach Anwendungsfall und gewünschter Kinematik kann ein geeignetes Koppelgetriebe vorgesehen werden.

Das Koppelgetriebe ist in dem Beispiel von Figur 11 und 12 durch zwei Kippstützen (14) gebildet, die einerseits an zueinander beabstandeten Drehlagerpunkten (37) mit dem Lenkerabschnitt (2a) und andererseits an zwei weiteren zueinander beabstandeten Drehlagerpunkten (38) mit dem Radträgerabschnitt (2b) verbunden sind. In der in Figur 11 gezeigten Referenzlage bilden die oberen Drehlagerpunkte (37) und die untere Drehlagepunkte (38) also die Eckpunkte eines symmetrischen und nach unten zulaufenden Trapezes. An der Vorder- und Rückseite der Antriebsvorrichtung (1) können bevorzugt einander entsprechende Kipplagerungen (13) mit in der Kinematik übereinstimmenden Koppelgetrieben vorgesehen sein. Alternativ kann nur ein einziges Koppelgetriebe oder ein Satz von Koppelgetrieben mit unterschiedlichen Kinematiken, die bevorzugt aufeinander abgestimmt sind.

Wird der Binnenabstand der oberen Drehlager (37) größer gewählt als der Binnenabstand der unteren Drehlager (38), so schließen die Verbindungslinien durch die oberen und unteren Drehlager (37, 38) einen spitzen Winkel zwischen sich ein und schneiden sich in der Kippachse (9, 9'). Bei einer Verkippung der Radachse (4) wird die Kippachse (9, 9') auf einem bogenförmigen und insbesondere elliptischen Versatzweg (36) von der Referenzlage (9) zu einer versetzten Lage (9') bewegt. Gleichzeitig kippt die Radanordnung (8) (infinitesimal) um die Drehachse (9). Der bogenförmige Versatzweg (36) ist in Figur 12 mit einer gestrichelten Linie skizziert.

Eine Kipplagerung (13) mit einer verschiebbaren Kippachse (9) kann auf eine beliebige andere Weise gebildet sein. Die Darstellung in Figuren 11 und 12 gibt lediglich eine bevorzugte Ausführung wieder.

Die Verschiebbarkeit und insbesondere die bogenförmige Verschiebbarkeit der Kippachse (9) hat den Vorteil, dass beim Überfahren von Bodenunebenheiten jeweils ein Rad (5a/5b) der koaxialen Radanordnung (8) angehoben werden kann, ohne dass dies zu parasitären Effekten führt, wie beispielsweise einer starken Verdrehung des Schwenkradträgers (2) um die Lenkachse (3) oder zu einem Verlust der Bodenhaftung an dem anderen Rad (5b/5a) der koaxialen Radanordnung (8) oder einer anderen Antriebsvorrichtung (1) an demselben zu bewegenden Objekt. Derartige parasitäre Effekte können durch die Verschieblichkeit der Kippachse (9) zumindest reduziert oder vollständig beseitigt werden. Mit anderen Worten reduziert die (bevorzugt bogenförmige) Beweglichkeit der Kipplagerung (13) einen störenden Quereinfluss auf die Ermittlung der Ist-Bewegung (MD`) der Antriebsvorrichtung (1) .

Gemäß einer alternativen Ausführung kann die Kipplagerung (13) eine stationäre Kippachse aufweisen.

Ein Lenkerabschnitt (2a) des Schwenkradträgers (2) ist bevorzugt in Bezug auf die Kippachse (9) drehbar gegenüber dem Radträgerabschnitt (2b) des Schwenkradträgers (2) gelagert. Die koaxiale Radanordnung (8) kann somit zusammen mit dem Radträgerabschnitt (2b) um die Kippachse (9) gegenüber dem Lenkerabschnitt (2a) gekippt werden. Bei einer verschieblichen Kippachse ist eine infinitesimale Drehbeweglichkeit ermöglicht, welche mit der Bogenbewegung (36) der Kippachse überlagert ist. Bei einer stationären Kippachse liegt eine reine Drehbewegung vor.

Die Kippachse (9) ist bevorzugt im Wesentlichen horizontal und senkrecht zur Radachse (4) ausgerichtet. Die Höhenlage der Kippachse (9) ist beliebig wählbar. Gemäß der in Figuren 11 und 12 gezeigten bevorzugten Ausführung ist die Kippachse (9) parallel zur Vorausrichtung (X) beziehungsweise Längsachse der koaxialen Radanordnung (8) orientiert und um einen Höhenversatz (dB) in vertikaler Richtung nach unten versetzt angeordnet. Der vertikale Achsversatz (dB) kann bevorzugt 35 bis 65 % der Radhöhe der Antriebsräder (5a,5b) ausmachen. Mit anderen Worten kann die Kippachse (9, 9') je nach Ausschwenkung bevorzugt leicht ober halb oder leicht unterhalb der Radaufstandslinie (39) liegen. Alternativ ist ein beliebiger anderer Wert möglich. Wiederum alternativ kann die Kippachse (9) auf derselben Höhenlage mit der Vorausrichtung (X) beziehungsweise Längsachse liegen. Mit anderen Worten kann die Kippachse (9) derart angeordnet sein, dass sie die Radachse (4) schneidet.

Die Kipplagerung (13) kann eine freie, das heißt ungehinderte Kippbewegung zulassen. Alternativ kann die Antriebsvorrichtung (1) eine Kippfederung (nicht darsgetellt) aufweisen. Die Kippfederung ist bevorzugt dazu ausgebildet, die Radachse (4) in eine Grund-Ausrichtung zu drängen, die senkrecht zur Lenkachse (3) orientiert ist. Alternativ oder zusätzlich kann die Kippfederung eine Dämpfung bewirken.

Gemäß der in Figuren gezeigten bevorzugten Ausführung können die Kippstützen (14) eine elastische Ausbildung haben und/oder Feder- oder Dämpfungsmittel umfassen. Gemäß einer weiteren optionalen Ausführung können elektrische Leitungen an oder innerhalb der Kippstützen (14) vorgesehen sein, welche die Radantriebe (6) und/oder die Lenkrotationsüberwachung (11) mit der Bewegungsregelung (10) verbinden. Alternativ oder zusätzlich können hierfür separate Leitungen vorgesehen sein.

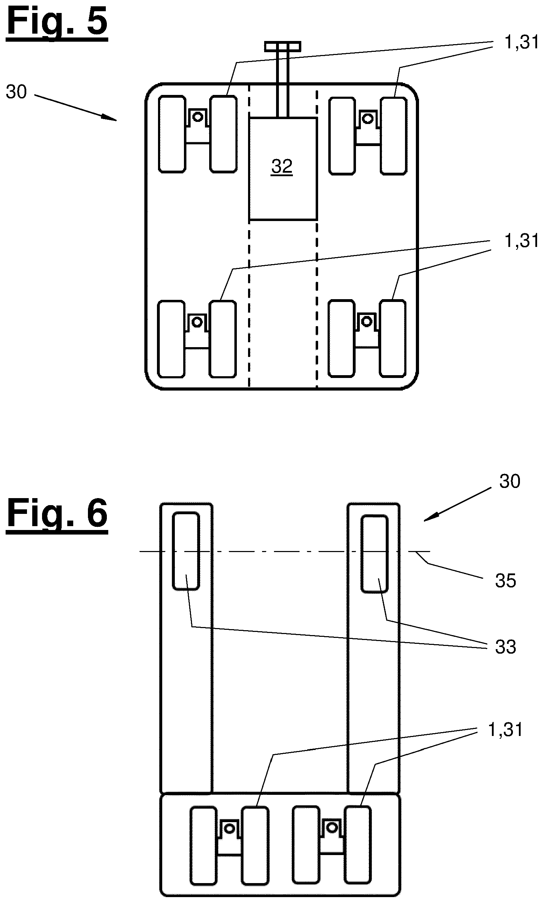

Figuren 5 bis 7 zeigen Ausführungsvarianten einer offenbarungsgemäßen Antriebsplattform (32), die dazu ausgebildet ist, eine angetriebene omnidirektionale Beweglichkeit in der Ebene für ein anzutreibendes Objekt bereitzustellen. Die Antriebsplattform (30) umfasst bevorzugt mindestens eine und bevorzugt zwei, drei oder vier Antriebsvorrichtungen (1) gemäß der vorliegenden Offenbarung. Gegebenenfalls können an der Antriebsplattform (30) auch ein oder mehrere Hilfsräder (33) vorgesehen sein, die eine beliebige Ausbildung haben können. Bevorzugt ist ein Hilfsrad (33) frei drehbar und ohne eigenen Antrieb ausgebildet. Etwaig können an einem Hilfsrad (33) Brems- oder Blockademittel vorgesehen sein. Im Hinblick auf das Sicherheitskonzept gemäß der vorliegenden Offenbarung wird hier doch bevorzugt auf Brems- und Blockademittel verzichtet.

Die Antriebsplattform (30) weist bevorzugt einen (elektrischen) Energiespeicher (34) auf. Dieser ist insbesondere dazu ausgebildet, die ein, zwei oder mehr Antriebsvorrichtungen (1) mit einem Laststrom zu versorgen.

An der Antriebsplattform (30) können eine, zwei oder mehr Modulaufnahmen (31) vorgesehen sein, welche gegengleich mit der Modul-Schnittstelle (19) der Antriebsplattform (1) korrespondieren. Die Modulaufnahmen können entsprechend eine Daten-Schnittstelle, insbesondere in Ausbildung als BUS-Schnittstelle, und/oder einer Laststrom-Schnittstelle und/oder eine mechanische Befestigungsstruktur aufweisen, die mit den jeweiligen Daten-Schnittstellen (16), Laststrom-Schnittstellen (17) und mechanischen Befestigungsstrukturen (20) der Antriebsvorrichtung (1) korrespondieren.

An der Antriebsplattform (13) ist bevorzugt weiterhin die Plattform-Bewegungssteuerung (32) vorgesehen. Diese kann eine beliebige körperliche Ausbildung haben. Sie ist bevorzugt als elektronische Steuereinheit ausgebildet. Eine Energieversorgung kann bevorzugt über den Energiespeicher (34) erfolgen.

Die Plattform-Bewegungssteuerung (32) ist bevorzugt dazu ausgebildet, eine relative Anordnung der einen, zwei oder mehr Antriebsvorrichtungen (1) an der Antriebsplattform (30) zu erfassen und/oder zu speichern. Das Erfassen kann beispielsweise durch eine Lernfahrt erfolgen, in welcher eine erste Antriebsvorrichtung (1) zur Ausführung einer Soll-Bewegung (MD*) für diese Antriebsvorrichtung (1) angewiesen wird. Die anderen Antriebsvorrichtungen (1) können währenddessen stromlos und damit frei drehbar geschaltet sein und/oder in einem Ausweich-Bewegungsmodus betrieben werden. Während der Lernfahrt wird eine Ist-Bewegung (MD`) der ersten Antriebsvorrichtung (1) sowie bevorzugt jeweils eine Ist-Bewegung (MD`) der anderen Antriebsvorrichtungen (1) erfasst. Aus der Auswertung von zumindest zwei und bevorzugt allen Ist-Bewegungen kann die relative Lage (Anordnungsgeometrie) zwischen den Antriebsvorrichtungen (1) und insbesondere deren Lenkachsen (3) berechnet werden. Diese wird bevorzugt in einem Speicher abgelegt und für die Plattform-Bewegungssteuerung (32) bereitgehalten. Alternativ kann die relative Anordnung (Anordnungsgeometrie) der Antriebsvorrichtungen (1) manuell bestimmt und eingespeichert werden.

Die Plattform-Bewegungssteuerung (32) ist bevorzugt dazu ausgebildet, eine Bewegungsregelung für die Plattform (30) auszuführen. Sie ist somit dazu ausgebildet, eine Soll-Bewegung der Plattform (MP*) in eine oder mehrere Soll-Bewegungen (MD*) der einen oder mehreren Antriebsvorrichtungen (1) zu konvertieren. Die Konvertierung kann insbesondere auf Basis der Lehre der Momentanpole erfolgen.

Die Plattform-Bewegungssteuerung (32) ist weiterhin dazu ausgebildet, eine Ist-Bewegung der Plattform (MP*) zu ermitteln und die Bewegungsregelung derart auszuführen, dass die festgestellte Ist-Bewegung (MP') der Soll-Bewegung (MP*) nachfolgt.

Die Ist-Bewegung der Plattform (MP*) kann bevorzugt aus den Parametern ermittelt werden, die von der mindestens einen Antriebsvorrichtung (1) bezogen werden, wobei die bezogenen Parameter die Ist-Bewegung (MD*) dieser Antriebsvorrichtung (1) beschreiben. Bevorzugt werden derartige Parameter von allen Antriebsvorrichtungen (1) bezogen.

Die Plattform-Bewegungssteuerung (32) weist bevorzugt zwei oder mehr und insbesondere mindestens drei Bewegungsmodi auf, in denen Sie betreibbar ist. Diese Bewegungsmodi können mit den Bewegungsmodi der Bewegungsregelung (10) der Antriebsvorrichtung (1) korrespondieren. Insbesondere können die Plattform-Bewegungssteuerung (32) und die Bewegungsregelung (10) der Antriebsvorrichtung (1) im jeweiligen Bewegungsmodus zusammenwirken.

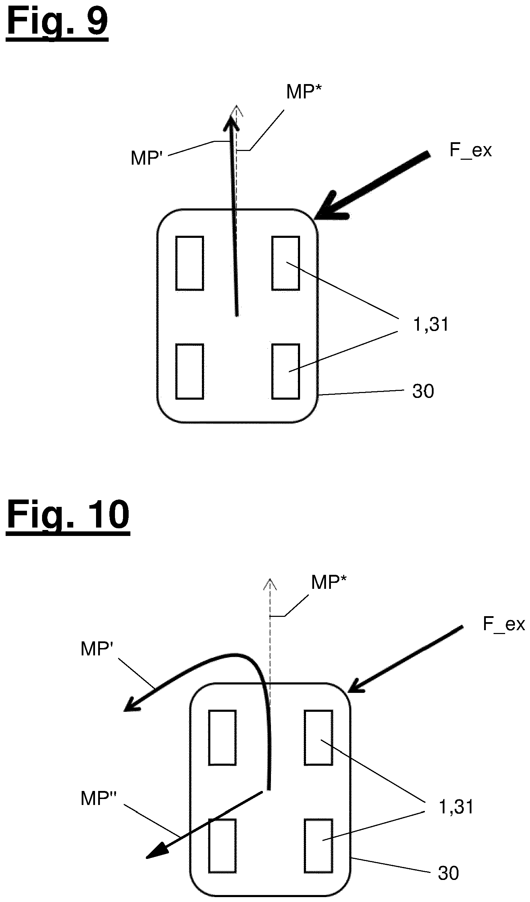

Ein erster Bewegungsmodus für die Plattform-Bewegungssteuerung (32) ist ein Zwangs-Bewegungsmodus, in welchem die mindestens eine Antriebsvorrichtung (1) an der Antriebsplattform (30) gemäß einer vorgegebenen Soll-Bewegung (MP*) für die Plattform betrieben wird, und zwar unter Ausnutzung der vollen Antriebsleistung. Figur 9 zeigt ein Beispiel für eine Ist-Bewegung (MP`), die sich ergibt, wenn der Zwangs-Bewegungsmodus ausgeführt wird und eine externe Kraft (F_ex) einwirkt. Die Ist-Bewegung (MP`) der Antriebsplattform (30) ist der Soll-Bewegung (MP*) angenähert. Wenn keine äußere Kraft (F_ex) einwirken würde, wären die Verläufe von Ist-Bewegung (MP') und Soll-Bewegung (MP*) der Antriebsplattform (30) identisch.

Ein zweiter Bewegungsmodus ist ein nachgiebiger Bewegungsmodus, in welchem die mindestens eine Antriebsvorrichtung (1) derart betrieben wird, dass die Ist-Bewegung (MP`) der Plattform einer vorgegebenen Soll-Bewegung (MP*) für die Plattform angenähert wird, allerdings nur innerhalb eines vorgegebenen Maximalwerts für die Antriebsleistung der Antriebsvorrichtung (1).

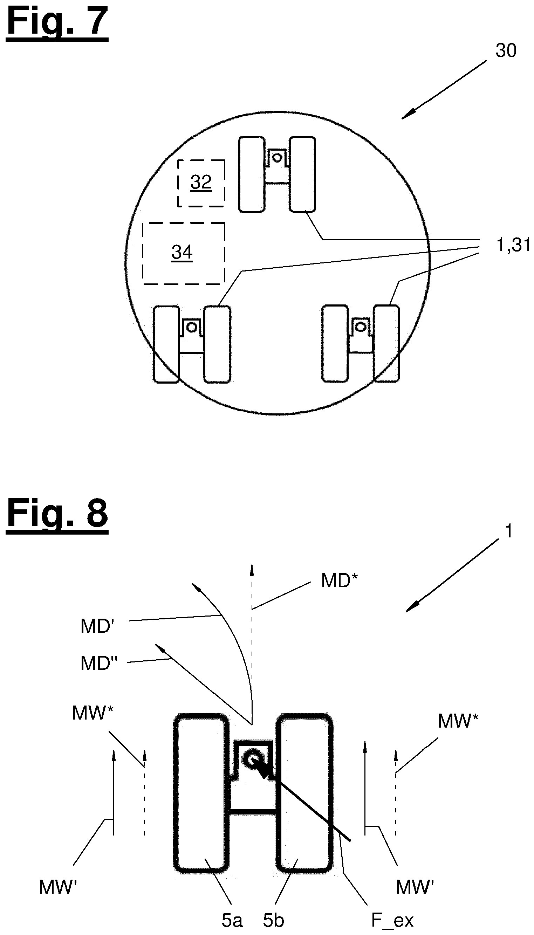

Figuren 8 und 10 illustrieren diesen Bewegungsmodus. Hier wird eine externe Kraft (F_ex) über die Lenkachse (3) auf die Antriebsvorrichtung (1) übertragen. Durch das infolge der externen Kraft bewirkte Drehmoment dreht sich die Antriebsvorrichtung nach links. Die Ist-Bewegung (MW') des rechten Antriebsrads (5b) wird gegenüber der Soll-Bewegung (MW*) für das rechte Antriebsrad (5b) beschleunigt und entsprechend weicht die Ist-Bewegung (MD') der Antriebsvorrichtung (1) im weiteren Verlauf von der Soll-Bewegung (MD*) für die Antriebsvorrichtung (1) ab. Je stärker oder je länger die äußere Kraft (F_ex) einwirkt, desto mehr gleicht sich die Orientierung der Antriebsvorrichtung (1) der Einwirkrichtung der externen Kraft (F_ex) an.

Die Erläuterungen zu Figur 8 gelten auch für den Betrieb der Bewegungsregelung (10) der Antriebsvorrichtung (1) im nachgiebigen Bewegungsmodus.

Ein dritter Bewegungsmodus ist ein Ausweich-Bewegungsmodus, in welchem die Ist-Bewegung (MP`) der Plattform (32) einer festgestellten und von außen einwirkenden Kraft (F_ex) durch gesteuerte Bewegung der mindestens einen Antriebsvorrichtung (1) nachfolgt, insbesondere unter teilweiser oder vollständiger Abkehr von einer Soll-Bewegung (MP*) für die Plattform (32).

In dem Beispiel von Figur 8 wird die Antriebsvorrichtung (1) im Ausweich-Bewegungsmodus eine Ist-Bewegung (MD") ausführen, die direkt der Einwirkrichtung der externen Kraft (F_ex) nachfolgt. Analog dazu ist in Figur 10 eine Ist-Bewegung (MP") für die Antriebsplattform (30) gezeigt, die sich bei Nutzung des Ausweich-Bewegungsmodus für die Plattform-Bewegungssteuerung (32) ergibt.

Oben wurde beschrieben, dass die Bewegungsregelung (10) der Antriebsplattform (1) eine Regelung ausführen kann, bei der die festgestellte Ist-Bewegung (MD`) der Antriebsvorrichtung (1) einer Soll-Bewegung (MD*) für die Antriebsvorrichtung (1) angenähert wird. Eine solche Regelung kann alternativ oder zusätzlich durch die Plattform-Bewegungssteuerung (32) ausgeführt werden.

Ferner ist die Plattform-Bewegungssteuerung (32) bevorzugt dazu ausgebildet, die globale Bewegungslogik abzubilden und zwar auch im Hinblick auf etwaige Randbedingungen, die durch Hilfsräder (33) erzeugt werden.

In den Beispielen gemäß Figuren 5 und 7 sind an der Antriebsplattform (30) ausschließlich Antriebsvorrichtungen (1) gemäß der vorliegenden Offenbarung vorgesehen, durch welche der Fahrkontakt zwischen der Antriebsplattform (30) und der Fahrebene hergestellt wird. Da jede dieser Antriebsvorrichtungen (1) für sich eine omnidirektionale Bewegung in der Ebene gestattet, ist auch die Antriebsplattform (30) insgesamt omnidirektional bewegbar.

Bei dem in Figur 6 gezeigten Beispiel sind allerdings zwei Hilfsräder (33) vorgesehen, die jeweils eine starre Radachse (35) aufweisen. An den Aufstandspunkten dieser Hilfsräder (33) ist also nur eine Bewegung senkrecht zur starren Radachse (35) in der Ebene möglich. Ein Momentanpol für die Bewegung der Antriebsplattform (30) gemäß Figur 6 kann also nur entlang der (koaxial zueinander liegenden) Radachsen (35) zu liegen kommen. Dies stellt eine Randbedingung für die Gesamtbewegung der Antriebsplattform (30) dar. Die Plattform-Bewegungssteuerung (32) ist bevorzugt dazu ausgebildet, eine Soll-Bewegung (MP*) für die Plattform unter Berücksichtigung derartiger Randbedingungen vorzusehen. Sie ist weiterhin bevorzugt dazu ausgebildet, eine Soll-Bewegung (MD*) der mindestens einen Antriebsvorrichtung (1) in Abhängigkeit von der bekannten Relativlage der Antriebsvorrichtungen (1) und etwaig vorhandener Hilfsräder (33) sowie deren Bewegungsbeschränkungen zu berechnen. Die Berechnung erfolgt bevorzugt derart, dass die Soll-Bewegungen (MD*) der Antriebsvorrichtungen (1) mit der gemäß den Randbedingungen möglichen Soll-Bewegung (MP*) der Antriebsplattform (30) korrespondieren. Hierfür können wiederum die Berechnungsregeln der Momentanpol-Bewegung zu Grunde gelegt werden.

Abwandlungen der Erfindung sind in verschiedener Weise möglich. Insbesondere können alle zu den Ausführungsbeispielen beschriebenen, gezeigten oder beanspruchten Merkmale in beliebiger Weise miteinander kombiniert oder gegeneinander ersetzt werden.

Die Antriebstechnik gemäß der vorliegenden Offenbarung kann bevorzugt für autonome mobile Roboter und deren Bewegungsplattformen eingesetzt werden. Die Radantriebe (6) können jeweils separat für ein Antriebsrad (5a,5b) vorgesehen sein. Alternativ kann ein erster Antrieb vorgesehen sein, welcher die koaxiale Doppel-Radanordnung (8) insgesamt in eine Drehbewegung versetzt. Ein zweiter Radantrieb kann dafür vorgesehen sein, innerhalb der koaxialen Doppel-Radanordnung (8) eine Differenzgeschwindigkeit zwischen dem ersten Antriebsrad (5a) und dem zweiten Antriebsrad (5b) zu erzeugen. Wenn in diesem Beispiel ausschließlich der erste Antrieb genutzt wird, führen die Antriebsräder (5a,5b) gemeinsam eine reine Translation aus. Wird nur der zweite Antrieb genutzt, führen die Antriebsräder (5a,5b) eine reine Rotation um den Mittelpunkt zwischen den Radaufstandspunkten auf. Durch eine Kombination der beiden Antriebsformen ist eine Bewegung auf einer beliebigen Kurvenbahn möglich.

Die Antriebstechnik gemäß der vorliegenden Offenbarung ist bevorzugt dazu ausgebildet Energie von einer Energieversorgung und insbesondere dem Energiespeicher (34) zu den Radantrieben (6) zu speisen und umgekehrt.

Die Radantriebe können bevorzugt durch bürstenlose Gleichstrommotoren (BLDC) gebildet sein. Diese weisen weiter bevorzugt drei elektrische Phasen auf, um die Magnetkräfte innerhalb des Motors zu steuern. Jeder Phasenstrom wird bevorzugt unabhängig gemessen und etwaig überwacht. Bei einer festgestellten Fehlbalance zwischen den Motorströmen kann der Motor still gesetzt werden.

Die verschiedenen Parameter und Sensordaten, auf deren Basis die verschiedenen Ist-Bewegungen (MW',MD',MP') der Antriebsräder (5a,5b), der Antriebsvorrichtungen (1) sowie der Antriebsplattform (30) erfasst oder ermittelt werden, werden bevorzugt gegeneinander auf Plausibilität überprüft. Hierdurch können beispielsweise singulär auftretende Sensorfehler identifiziert werden. Bevorzugt sind die Plattform-Bewegungssteuerung (32) und/oder die Bewegungsregelung (10) der Antriebsvorrichtung (1) dazu ausgebildet, für einen oder jeden Parameter parallel einen äquivalenten Schätzparameter zu berechnen, der sich aus der Anordnungsgeometrie und den sonstigen ermittelten Parametern ergibt. Wenn ein Sensorfehler erkannt wird, kann der durch Messung ermittelte Parameter zeitweise oder dauerhaft durch den äquivalenten Schätzparameter ersetzt werden, wodurch ein hohes Maß an Fehlerrobustheit erreicht wird.

Die Antriebsvorrichtung (1) weist bevorzugt eine in sich geschlossene Modulstruktur auf. Sie kann mechanisch durch eine begrenzte Zahl an Befestigungsmitteln mit einem anzutreibenden Objekt und insbesondere der Antriebsplattform (30) verbunden werden. Alle für den Betrieb der Antriebsvorrichtung notwendigen Aktuatoren (Radantriebe (6)), Sensoren (Radrotationsüberwachung (12a,12b)) und etwaig Lenkrotationsüberwachung (11) sowie die notwendigen Steuerkomponenten (Bewegungsregelung (10), die für den Betrieb der Antriebsvorrichtung erforderlich sind, sind in die Vorrichtung integriert.

Für die logische Konfiguration und Integration der Antriebsvorrichtung (1) in ein äußeres Steuersystem speichert bevorzugt ein elektronisches Steuergerät, insbesondere die durch einen Mikrocontroller gebildete Bewegungsregelung (10) an der Antriebsvorrichtung (1) alle Charakteristiken und Parameter, die für die Bewegungsregelung und die Umsetzung äußerer Vorgaben für die Soll-Bewegung notwendig sind, beispielsweise für die Überführung von Drehmoment in Kraft. Zu den gespeicherten Daten können auch weitere Informationen über die Geometrie der Antriebsvorrichtung sowie ihren inneren Betriebszustand gehören. Diese gespeicherten Daten können über die Daten-Schnittstelle und insbesondere über eine Standardkommunikations-API sowie ein standardisiertes industrielles Bussystem bei einer bestimmten Frequenz zu einer externen Steuerung übertragen werden. Auf diese Weise kann die externe Steuerung bei Bedarf detaillierte Kenntnis über die für die Bewegungsregelung relevanten Eigenschaften einer Antriebsvorrichtung (1) erhalten.

Weiterhin ist es möglich, eine Antriebsvorrichtung (1) durch eine andere Antriebsvorrichtung mit einer abweichenden Geometrie, einer anderen Konfiguration der Radantriebe usw. zu tauschen, ohne dass hierfür eine vollständige Neuprogrammierung nötig wäre. Alle für die Ansteuerung der getauschten Antriebsvorrichtung benötigten Parameter und Charakteristiken können direkt von dieser Antriebsvorrichtung (1) bzw. deren Bewegungsregelung (10) bezogen werden.

Die Antriebstechnik gemäß der vorliegenden Offenbarung ermöglicht eine omnidirektionale Bewegung in der Ebene.

Dies wird durch das Zusammenspiel verschiedener Aspekte unterstützt. Einerseits ist an der Antriebsvorrichtung (1) eine koaxiale Radanordnung (8) mit Direktantrieben vorgesehen, bei denen Drehmoment, Rotationsgeschwindigkeit und die Drehlage der Antriebsräder (5a,5b) unabhängig voneinander gesteuert und/oder geregelt werden können. Das bedeutet insbesondere, dass das erste Antriebsrad und das zweite Antriebsrad bei unterschiedlichen Geschwindigkeiten und in unterschiedlichen Richtungen erzeugbar sind. Weiterhin ist die koaxiale Radanordnung über ein Drehgelenk mit dem anzutreibenden Objekt verbunden, wobei zwischen dem Drehgelenk und der Radachse der koaxialen Radanordnung (6) ein horizontaler Achsversatz (dA) vorgesehen ist. Das Drehgelenk wird an der Lenkachse (3) vorgesehen. Durch dieses Drehgelenk bzw. die freie Drehbarkeit um die Lenkachse (3) kann sich die Antriebsvorrichtung (1) unter dem anzutreibenden Objekt insgesamt frei drehen und damit ihre momentane Ausrichtung relativ zum angetriebenen Objekt ändern. Durch das Vorsehen mind. einer zweiten Antriebsvorrichtung an dem anzutreibenden Objekt und insbesondere an der Antriebsplattform (30) wird die statische Bestimmtheit gegenüber der Fahrebene hergestellt. Durch den gesteuerten Betrieb der mind. zwei Antriebsvorrichtungen (1) können somit alle Freiheitsgrade für die ebene Bewegung des anzutreibenden Objekts frei vorgegeben werden.

Eine omnidirektionale angetriebene Bewegung wäre auch dann möglich, wenn die Lenkachse (3) die Radachse (4) schneiden würde. Durch die windschiefe Anordnung von Lenkachse (3) und Radachse (4) bzw. das Vorsehen eines horizontalen Achsversatzes (dA) wird zusätzlich eine omnidirektionale Beweglichkeit in Folge von außen aufgebrachter Kräfte ermöglicht, d.h. eine antriebslose bzw. passive omnidirektionale Beweglichkeit.

Die offenbarungsgemäße Antriebsvorrichtung (1) und die Antriebsplattform (30) sind leicht zu einem Gesamtsystem konfigurierbar. Einerseits können Antriebsvorrichtungen (1) in beliebiger Anzahl und in beliebiger geometrischer Anordnung an einer Antriebsplattform (30) vorgesehen werden. Im einfachsten Fall bietet die Antriebsplattform (30) lediglich eine Tragstruktur.

Eine Plattform-Bewegungssteuerung (32) kann als separate Vorrichtungskomponente und/oder Steuerungskomponente an der Antriebsplattform (30) vorgesehen sein. Alternativ kann die Plattform-Bewegungssteuerung (32) mit der Bewegungsregelung (10) einer Antriebsvorrichtung (1) integriert sein. In diesem Fall kann die Bewegungsregelung (10) einer ersten Antriebsvorrichtung (1) beispielsweise als Master-Controller betrieben werden, der die Soll-Bewegungen (MP*,MD*) für die Plattform sowie für die ersten Antriebsvorrichtung (1) und auch die anderen Antriebsvorrichtungen bereitstellt.

Die Bewegungsregelung (10) an den anderen Antriebsvorrichtungen (1) kann dann die regionale Bewegungsregelung als Client-Controller gemäß den Vorgaben der ersten Antriebsvorrichtung (1) umsetzen.

Durch das Vorsehen eines Nachfolge-Bewegungsmodus wird erreicht, dass das anzutreibende Objekt einerseits leichtgängig weggeschoben werden kann, andererseits aber nicht von selbst wegrollt. Die extern aufgebrachte Kraft kann durch beliebige in der Praxis bekannte Verfahren ermittelt werden, insbesondere durch Erfassung der Motorströme an den Radantrieben (6) und eine zusätzliche Neigungserfassung und/oder einer bekannten Trägheit des anzutreibenden Objekts. Die Bewegungsregelung (10) und/oder die Plattform-Bewegungssteuerung (32) ist bevorzugt dazu ausgebildet, eine extern einwirkende Kraft (F_ex) von intrinsischen Kräften wie beispielsweise einer Hangabtriebskraft zu unterscheiden. In dem Ausweich-Bewegungsmodus werden die Bewegungen der Antriebsvorrichtungen (1) bevorzugt derart gesteuert oder geregelt, dass die Ist-Bewegung (MP`) der Plattform (32) und/oder die Ist-Bewegung (MD`) der Antriebsvorrichtung (1) ausschließlich der festgestellten und von außen einwirkenden Kraft (F_ex) nachfolgt, nicht jedoch einer festgestellten intrinsischen Kraft.

Zu den intrinsischen Kräften können auch solche Kräfte gehören, die aus einem Arbeitsbetrieb einer Maschine folgen, die mit der Antriebsplattform (30) verbunden ist. Eine solche Maschine kann beispielsweise ein Roboter und insbesondere ein mehrachsiger Gelenkarmroboter sein.

Abwandlungen der Erfindung sind in verschiedener Weise innerhalb des Geltungsbereichs der beigefügten Ansprüche möglich. Insbesondere können die zu den jeweiligen Ausführungsbeispielen gezeigten, beschriebenen oder beanspruchten Merkmale in beliebiger Weise miteinander kombiniert, gegeneinander ersetzt, ergänzt oder weggelassen werden.

Die Lenkachse (3) kann durch beliebige körperliche Mittel bereitgestellt sein. In allen Ausführungsvarianten kann die Lenkachse (3) durch einen Zapfen- oder Wellenkörper gebildet sein. Der Zapfen- oder Wellenkörper kann einen geschlossenen Querschnitt haben. Alternativ kann der Zapfen- oder Wellenkörper ein Hohlkörper sein. Die Schleifring-Anordnung (15) kann außenseitig an dem Zapfen- Hohlkörper angeordnet sein. Alternativ oder zusätzlich kann eine Schleifring-Anordnung (15) an oder in einem Hohlraum des als Hohlkörper ausgebildeten Zapfen- oder Wellenkörpers angeordnet sein.

Wiederum alternativ kann die Lenkachse (3) durch einen ringförmigen Körper gebildet sein, beispielsweise durch ein ringförmiges Wälz- oder Gleitlager. Der Ringförmige Körper kann einen beliebigen Durchmesser und eine beliebige Innenweite haben. Die Innenweite kann so groß bemessen sein, dass der ringförmige Körper den Schwenkradträger (2), insbesondere den Lenkerabschnitt (2a) oder den Radträgerabschnitt (2b) umschließt. Auf diese Weise kann eine besonders niedrige Bauart erreicht werden (nicht dargestellt).

**BEZUGSZEICHENLISTE**

| | | |
|---|---|---|
| 1 | Antriebsvorrichtung | *Driving device* |
| 2 | Schwenkradträger | *Swivel caster carrier* |
| 2a | Lenkerabschnitt | *Steering section* |
| 2b | Radträgerabschnitt | *Wheel carrier section* |
| 3 | Lenkachse, aufrecht / vertikal | *Steering axis, upright* / *vertical* |
| 4 | Radachse, im Wesentlichen horizontal | *Wheel axis, essentially horizontal* |
| 5a | Antriebsrad | *Propulsion wheel* |
| 5b | Antriebsrad | *Propulsion wheel* |
| 6 | Radantrieb, selbsthemmungsfrei | *Wheel drive, selfretention free* |
| 7 | Naben-Direktantrieb | *direct drive hub* |
| 8 | Koaxiale Radanordnung / Koaxiale Doppel-Radanordnung | *Coaxial wheel arrangement* / *coaxial twin wheel arrangement* |
| 9 | Kippachse (Referenzlage) | *Tilting axis (reference position)* |
| 9' | Kippachse (versetzte Lage) | *Tilting axis (shifted position)* |
| 10 | Bewegungsregelung | *Movement regulation* |
| 11 | Lenkrotationsüberwachung | *Steering rotation monitoring* |
| 12a | Radrotationsüberwachung | *Wheel rotation monitoring* |
| 12b | Radrotationsüberwachung | *Wheel rotation monitoring* |
| 13 | Kipplagerung | *Tilting support* |
| 14 | Kippstützen | *Tilting supports* |
| 15 | Schleifring-Anordnung | *Slipring arrangement* |
| 15a | Dorsaler Schleifringteil | *Dorsal slipring part* |
| 15b | Distaler Schleifringteil | *Distal slipring part* |
| 16 | Daten-Schnittstelle / BUS-Schnittstelle | *Data interface*/ *BUS interface* |
| 17 | Laststrom-Schnittstelle | *Load current interface* |
| 18 | Flanschkörper | *Flange body* |
| 19 | Modul-Schnittstelle | *Module interface* |
| 20 | Mechanische Befestigungsstruktur | *Mechanical fixing structure* |
| 30 | Antriebsplattform | *Propulsion platform* |
| 31 | Modulaufnahme | *Module reception* |
| 32 | Plattform-Bewegungssteuerung | *Platform motion control* |
| 33 | Hilfsrad | *Auxiliary wheel* |
| 34 | Energiespeicher / Batterie / Akku | *Energy storage* / *battery* / *accumulator* |
| 35 | Starre Radachse | *rigid wheel axis* |
| 36 | Versatzweg | *Shifting path* |
| 37 | Drehlager | *Rotational joints* |
| 38 | Drehlager | *Rotational joints* |
| dA | Nachlaufversatz / horizontaler Achsversatz | *Caster offset* / *horizontal axial displacement* |
| dB | Höhenversatz / vertikaler Achsversatz | *Height offset* / *vertical axial displacement* |
| F_ex | Kraft, von außen einwirkend | *Force, extrinsic* |
| MD' | Ist-Bewegung der Antriebsvorrichtung (im nachgiebigen Bewegungsmodus) | *Actual movement of driving device (in resilient movement mode)* |
| MD"" | Ist-Bewegung der Antriebsvorrichtung (im Ausweich-Bewegungsmodus) | *Actual movement of driving device (in evasion movement mode)* |
| MD* | Soll-Bewegung der Antriebsvorrichtung | *Target movement of driving device* |
| MP' | Ist-Bewegung der Plattform (im nachgiebigen Bewegungsmodus) | *Actual movement of platform (in resilient movement mode)* |
| MP" | Ist-Bewegung der Plattform (im Ausweich-Bewegungsmodus) | *Actual movement of platform (in evasion movement mode)* |
| MP* | Soll-Bewegung der Plattform | *Target movement of platform* |
| MW' | Ist-Bewegung eines Antriebsrads | *Actual movement of a driving wheel* |
| MW* | Soll-Bewegung eines Antriebsrads | *Target movement of a driving wheel* |
| X | Vorausrichtung / Längsachse | *Heading direction* / *longitudinal axis* |
| Y | Querrichtung / Querachse | *Lateral direction* / *lateral axis* |
| Z | Hochrichtung / Hochachse | *Upward direction* / *Upward axis* |

## Patentansprüche

1. Antriebsvorrichtung umfassend
- einen Schwenkradträger (2) mit einer aufrechten Lenkachse (3); und
- eine im Wesentlichen horizontale Radachse (4), die am Schwenkradträger (2) angeordnet ist; und
- ein erstes Antriebsrad (5a) und ein zweites Antriebsrad (5b), die um eine Radachse (4) drehbar und zueinander benachbart angeordnet sind; und
- mindestens zwei Radantriebe (6),
**dadurch gekennzeichnet, dass**
- der Schwenkradträger frei um die Lenkachse (3) drehbar ist und die Radachse (4) durch einen Nachlaufversatz (dA) gegenüber der aufrechten Lenkachse (3) windschief versetzt angeordnet ist; UND
- die Antriebsvorrichtung (1) eine Bewegungsregelung (10) aufweist, die dazu ausgebildet ist, die Antriebsvorrichtung (1) in eine beliebige Richtung in der Horizontalebene zu bewegen, indem die Radbewegungen des ersten und des zweiten Antriebsrads (5a, 5b) separat gesteuert werden.

2. Antriebsvorrichtung nach Anspruch 1, wobei die Bewegungsregelung (10) dazu ausgebildet ist, eine Soll-Bewegung (MW*) des ersten und des zweiten Antriebsrads (5a, 5b) in Abhängigkeit von der bekannten Geometrie der Antriebsräder (5a, 5b) sowie in Abhängigkeit der bekannten Relativlage der Radachse (4) und der Lenkachse (3) zu berechnen, und zwar derart, dass die Soll-Bewegungen (MW*) der Antriebsräder (5a, 5b) mit einer Soll-Bewegung (MD*) der Antriebsvorrichtung (1) korrespondieren.

3. Antriebsvorrichtung nach Anspruch 1 oder 2, wobei die Radantriebe (6) selbsthemmungsfrei ausgebildet sind, sodass das erste und das zweite Antriebsrad (5a, 5b) im stromfreien Zustand des Radantriebs (6) frei um die Radachse (4) drehbar sind.

4. Antriebsvorrichtung nach einem der vorhergehenden Ansprüche, wobei der Radantrieb (6) als getriebeloser Direktantrieb ausgebildet ist, insbesondere als Nabenantrieb.

5. Antriebsvorrichtung nach einem der vorhergehenden Ansprüche, wobei die Bewegungsregelung (10) mindestens zwei Bewegungsmodi aufweist und dazu ausgebildet ist,
- zeitweise in einem Zwangs-Bewegungsmodus betrieben zu werden, in welchem die Antriebsvorrichtung (1) gemäß einer vorgegebenen Soll-Bewegung (MD*) bewegt wird, und zwar unter Ausnutzung der vollen Antriebsleistung; UND/ODER
- zeitweise in einem nachgiebigen Bewegungsmodus betrieben zu werden, in welchem die Antriebsvorrichtung (1) derart bewegt wird, dass die Ist-Bewegung (MD') der Antriebsvorrichtung (1) einer vorgegebenen Soll-Bewegung (MD*) angehnährt wird, allerdings nur innerhalb eines vorgegebenen Maximalwerts für die Antriebsleistung; UND/ODER
- zeitweise in einem Ausweich-Bewegungsmodus betrieben zu werden, in welchem die Ist-Bewegung (MD') der Antriebsvorrichtung (1) einer festgestellten und von außen einwirkenden Kraft (F_ex) durch gesteuerte Bewegung des ersten und/oder zweiten Antriebsrads (5a, 5b) nachfolgt, insbesondere unter teilweiser oder vollständiger Abkehr von einer vorgegebenen Soll-Bewegung (MD*) für die Antriebsvorrichtung (1) .

6. Antriebsvorrichtung nach einem der vorhergehenden Ansprüche, wobei die Bewegungsregelung (10) dazu ausgebildet ist,
- das erste und/oder das zweite Antriebsrad (5a, 5b) mit einer Drehmomentregelung oder mit einer Geschwindigkeitsregelung anzutreiben; UND/ODER
- für das erste und/oder das zweite Antriebsrad (5a, 5b) und/oder deren Radantrieb (6) einen Maximalwert festzulegen, durch den die Antriebsleistung beschränkt ist, insbesondere einen maximalen Stromwert oder einen maximalen Drehmomentwert oder einen Geschwindigkeitswert.

7. Antriebsvorrichtung nach einem der vorhergehenden Ansprüche, wobei die Antriebsvorrichtung (1)
- eine Lenkrotationsüberwachung (11) aufweist, die dazu ausgebildet ist, eine Drehlage und/oder eine Drehgeschwindigkeit und/oder eine Drehbeschleunigung des Schwenkradträgers (2) um die aufrechte Lenkachse (3) zu erfassen; UND/ODER
- eine Radrotationsüberwachung (12a, 12b) aufweist, die dazu ausgebildet ist, eine Drehlage und/oder eine Drehgeschwindigkeit und/oder eine Drehbeschleunigung eines Antriebsrads (5a, 5b) zu erfassen.

8. Antriebsvorrichtung nach einem der vorhergehenden Ansprüche, wobei die Antriebsvorrichtung (1) und insbesondere der Schwenkradträger (2) eine Kipplagerung (13) aufweist, die dazu ausgebildet ist, die Radachse (4) gegenüber einer horizontalen Ausrichtung kippbar zu lagern, um Unebenheiten der Fahrbahn durch eine relative Hebe- oder Senkbewegung der Antriebsräder (5a, 5b) zu kompensieren, wobei die Kipplagerung (13) insbesondere ein Koppelgetriebe aufweist.

9. Antriebsvorrichtung nach einem der vorhergehenden Ansprüche, wobei die Antriebsvorrichtung (1) eine Schleifring-Anordnung (15) aufweist, die dazu ausgebildet ist, Lastströme und/oder Datensignale an der Lenkachse (3) zu übertragen, wobei die Schleifring-Anordnung (15) insbesondere umfasst:
- einen dorsalen Schleifringteil (15a), der elektrisch leitend mit der Bewegungsregelung (10) und/oder mindestens einem Radantrieb (6) verbunden ist und drehfest an dem Schwenkradträger (2), insbesondere dem Lenkerabschnitt (2a) angeordnet ist; UND
- einen distalen Schleifringteil (15b), der elektrisch leitend mit dem dorsalen Schleifringteil (15a) verbunden und in Bezug auf die Lenkachse (3) frei drehbar gegenüber dem Schwenkradträger (2) angeordnet ist.

10. Antriebsplattform zur Bereitstellung einer angetriebenen omnidirektionalen Beweglichkeit in der Ebene, umfassend mindestens eine Antriebsvorrichtung nach einem der vorhergehenden Ansprüche, wobei die Antriebsplattform insbesondere zwei oder mehr Antriebsvorrichtungen (1) umfasst.

11. Antriebsplattform nach dem vorhergehenden Anspruch, wobei die Antriebsplattform eine Plattform-Bewegungssteuerung (32) umfasst, die dazu ausgebildet ist, eine Soll-Bewegung (MD*) für die mindestens eine Antriebsvorrichtung (1) vorzugeben, und wobei die Plattform-Bewegungssteuerung (32) insbesondere mit zwei oder mehr Antriebsvorrichtungen (1) verbunden ist.

12. Antriebsplattform nach einem der vorhergehenden Ansprüche 10 oder 11, wobei die Antriebsplattform mindestens ein Hilfsrad (33) umfasst.

13. Antriebsplattform nach einem der vorhergehenden Ansprüche 10 bis 12, wobei die Plattform-Bewegungssteuerung (32) dazu ausgebildet ist,
- eine relative Anordnung der ein, zwei oder mehr Antriebsvorrichtungen (1) zu erfassen und/oder zu speichern; UND/ODER
- eine Soll-Bewegung der Plattform (MP*) in eine oder mehrere Soll-Bewegungen (MD*) der einen oder mehreren Antriebsvorrichtungen (1) zu konvertieren; UND/ODER
- eine Ist-Bewegung der Plattform (MP') aus Parametern zu ermitteln, die von der mindestens einen Antriebsvorrichtung (1) bezogen sind, welche die Ist-Bewegung (MD') dieser Antriebsvorrichtung (1) beschreiben.

14. Antriebsplattform nach einem der vorhergehenden Ansprüche 10 bis 13, wobei die Plattform-Bewegungssteuerung (32) mindestens zwei Bewegungsmodi aufweist und dazu ausgebildet ist,
- zeitweise in einem Zwangs-Bewegungsmodus betrieben zu werden, in welchem die mindestens eine Antriebsvorrichtung (1) gemäß einer vorgegebenen Soll-Bewegung (MP*) für die Plattform betrieben wird, und zwar unter Ausnutzung der vollen Antriebsleistung; UND/ODER
- zeitweise in einem nachgiebigen Bewegungsmodus betrieben zu werden, in welchem die mindestens eine Antriebsvorrichtung (1) derart betrieben wird, dass die Ist-Bewegung (MP') der Plattform einer vorgegebenen Soll-Bewegung (MP*) für die Plattform angehnährt wird, allerdings nur innerhalb eines vorgegebenen Maximalwerts für die Antriebsleistung; UND/ODER
- zeitweise in einem Ausweich-Bewegungsmodus betrieben zu werden, in welchem die Ist-Bewegung (MP') der Plattform (32) einer festgestellten und von außen einwirkenden Kraft (F_ex) durch gesteuerte Bewegung der mindestens einen Antriebsvorrichtung (1) nachfolgt, insbesondere unter teilweiser oder vollständiger Abkehr von einer Soll-Bewegung (MP*) für die Plattform (32).

15. Antriebsplattform nach einem der vorhergehenden Ansprüche 10 bis 14, wobei die Plattform-Bewegungssteuerung (32) dazu ausgebildet ist, eine Soll-Bewegung (MD*) der mindestens einen Antriebsvorrichtung (1) in Abhängigkeit von der bekannten Relativlage der Antriebsvorrichtungen (1) und etwaig der Hilfsräder (33) zu berechnen, und zwar derart, dass die Soll-Bewegungen (MD*) der Antriebsvorrichtungen (1) mit einer Soll-Bewegung (MP*) der Antriebsplattform (30) korrespondieren.

## Claims

1. Drive apparatus comprising
- a swivel caster carrier (2) with an upright steering axis (3); and
- a substantially horizontal wheel axis (4) which is arranged on the swivel caster carrier (2); and
- a first drive wheel (5a) and a second drive wheel (5b) which are arranged adjacently with respect to one another and such that they can be rotated about a wheel axis (4); and
- at least two wheel drives (6),
**characterized in that**
- the swivel caster carrier can be rotated freely about the steering axis (3), and the wheel axis (4) is arranged offset in a skewed manner with respect to the upright steering axis (3) by way of a caster offset (dA); and
- the drive apparatus (1) has a movement regulation means (10) which is configured to move the drive apparatus (1) in any desired direction in the horizontal plane, by the wheel movements of the first and the second drive wheel (5a, 5b) being controlled separately.

2. Drive apparatus according to Claim 1, the movement regulation means (10) being configured to calculate a setpoint movement (MW*) of the first and the second drive wheel (5a, 5b) in a manner which is dependent on the known geometry of the drive wheels (5a, 5b) in a manner which is known on the known relative position of the wheel axis (4) and the steering axis (3), to be precise in such a way that the setpoint movements (MW*) of the drive wheels (5a, 5b) correspond with a setpoint movement (MD*) of the drive apparatus (1).

3. Drive apparatus according to Claim 1 or 2, the wheel drives (6) being of self-locking-free configuration, with the result that the first and the second drive wheel (5a, 5b) can be rotated freely about the wheel axis (4) in the current-free state of the wheel drive (6).

4. Drive apparatus according to one of the preceding claims, the wheel drive (6) being configured as a transmission-free direct drive, in particular as a hub drive.

5. Drive apparatus according to one of the preceding claims, the movement regulation means (10) having at least two operating modes and being configured
- to be operated at times in a forced movement mode, in which the drive apparatus (1) is moved in accordance with a predefined setpoint movement (MD*), to be precise with utilization of the full drive power; and/or
- to be operated at times in a flexible movement mode, in which the drive apparatus (1) is moved in such a way that the actual movement (MD') of the drive apparatus (1) is approximated to a predefined setpoint movement (MD*), but only within a predefined maximum value for the drive power; and/or
- to be operated at times in a deflecting movement mode, in which the actual movement (MD') of the drive apparatus (1) follows a determined force (F_ex) which acts from the outside by way of controlled movement of the first and/or second drive wheel (5a, 5b), in particular with partial or complete abandoning of a predefined setpoint movement (MD*) for the drive apparatus (1).

6. Drive apparatus according to one of the preceding claims, the movement regulation means (10) being configured
- to drive the first and/or the second drive wheel (5a, 5b) with a torque regulation or with a speed regulation; and/or
- to fix a maximum value for the first and/or the second drive wheel (5a, 5b) and/or their wheel drive (6), by way of which maximum value the drive power is restricted, in particular a maximum current value or a maximum torque value or speed value.

7. Drive apparatus according to one of the preceding claims, the drive apparatus (1)
- having a steering rotation monitoring means (11) which is configured to detect a rotary position and/or a rotary speed and/or a rotary acceleration of the swivel caster carrier (2) about the upright steering axis (3); and/or
- having a wheel rotation monitoring means (12a, 12b) which is configured to detect a rotary position and/or a rotary speed and/or a rotary acceleration of the drive wheel (5a, 5b).

8. Drive apparatus according to one of the preceding claims, the drive apparatus (1) and, in particular, the swivel caster carrier (2) having a tilting bearing (13) which is configured to mount the wheel axis (4) such that it can be tilted with respect to a horizontal orientation, in order to compensate for unevennesses of the roadway by way of a relative lifting or lowering movement of the drive wheels (5a, 5b), the tilting bearing (13) having, in particular, a coupler mechanism.

9. Drive apparatus according to one of the preceding claims, the drive apparatus (1) having a slip ring arrangement (15) which is configured to transmit load currents and/or data signals to the steering axis (3), the slip ring arrangement (15) comprising, in particular:
- a dorsal slip ring part (15a) which is connected in an electrically conducting manner to the movement regulation means (10) and/or at least one wheel drive (6), and is arranged fixedly on the swivel caster carrier (2), in particular the link portion (2a); and
- a distal slip ring part (15b) which is connected in an electrically conducting manner to the dorsal slip ring part (15a), and is arranged in relation to the steering axis (3) such that it can be rotated freely with respect to the swivel caster carrier (2).

10. Drive platform for providing a driven omnidirectional movability on the flat, comprising at least one drive apparatus according to one of the preceding claims, the drive platform comprising, in particular, two or more drive apparatuses (1).

11. Drive platform according to the preceding claim, the drive platform comprising a platform movement controller (32) which is configured to specify a setpoint movement (MD*) for the at least one drive apparatus (1), and the platform movement controller (32) being connected, in particular, to two or more drive apparatuses (1).

12. Drive platform according to either of the preceding Claims 10 and 11, the drive platform comprising at least one auxiliary wheel (33).

13. Drive platform according to one of the preceding Claims 10 to 12, the platform movement controller (32) being configured
- to detect and/order to store a relative arrangement of the one, two or more drive apparatuses (1); and/or
- to convert a setpoint movement of the platform (MP*) into one or more setpoint movements (MD*) of the one or more drive apparatuses (1); and/or
- to determine an actual movement of the platform (MP') from parameters which are obtained from the at least one drive apparatus (1) and describe the actual movement (MD') of this drive apparatus (1).

14. Drive platform according to one of the preceding Claims 10 to 13, the platform movement controller (32) having at least two movement modes and being configured
- to be operated at times in a forced movement mode, in which the at least one drive apparatus (1) is operated in accordance with a predefined setpoint movement (MP*) for the platform, to be precise with utilization of the full drive power; and/or
- to be operated at times in a flexible movement mode, in which the at least one drive apparatus (1) is operated in such a way that the actual movement (MP') of the platform is approximated to a predefined setpoint movement (MP*) for the platform, but only within a predefined maximum value for the drive power: and/or
- to be operated at times in a deflecting movement mode, in which the actual movement (MP') of the platform (32) follows a fixed force (F_ex) which acts from the outside by way of controlled movement of the at least one drive apparatus (1), in particular with partial or complete abandoning of a setpoint movement (MP*) for the platform (32).

15. Drive platform according to one of the preceding Claims 10 to 14, the platform movement controller (32) being configured to calculate a setpoint movement (MD*) of the at least one drive apparatus (1) in a manner which is dependent on the known relative position of the drive apparatuses (1) and possibly of the auxiliary wheels (33), to be precise in such a way that the setpoint movements (MD*) of the drive apparatuses (1) correspond with a setpoint movement (MP*) of the drive platform (30) .

## Revendications

1. Dispositif d'entraînement comprenant
- un support de roue pivotante (2) avec un axe de direction vertical (3) ; et
- un axe de roue essentiellement horizontal (4) agencé sur le support de roue pivotante (2) ; et
- une première roue d'entraînement (5a) et une deuxième roue d'entraînement (5b) qui peuvent tourner autour d'un axe de roue (4) et qui sont agencées au voisinage l'une de l'autre ; et
- au moins deux entraînements de roue (6), **caractérisé en ce que**
- le support de roue pivotante peut tourner librement autour de l'axe de direction (3) et l'axe de roue (4) est agencé de manière décalée de travers par rapport à l'axe de direction vertical (3) par un décalage de suivi (dA) ; ET
- le dispositif d'entraînement (1) présente une régulation de mouvement (10) configurée pour déplacer le dispositif d'entraînement (1) dans une direction quelconque dans le plan horizontal en commandant séparément les mouvements de roue de la première et de la deuxième roue d'entraînement (5a, 5b).

2. Dispositif d'entraînement selon la revendication 1, dans lequel la régulation de mouvement (10) est configurée pour calculer un mouvement de consigne (MW*) de la première et de la deuxième roue d'entraînement (5a, 5b) en fonction de la géométrie connue des roues d'entraînement (5a, 5b) ainsi qu'en fonction de la position relative connue de l'axe de roue (4) et de l'axe de direction (3), et ce de telle sorte que les mouvements de consigne (MW*) des roues d'entraînement (5a, 5b) correspondent à un mouvement de consigne (MD*) du dispositif d'entraînement (1).

3. Dispositif d'entraînement selon la revendication 1 ou 2, dans lequel les entraînements de roue (6) sont configurés sans auto-blocage, de telle sorte que la première et la deuxième roue d'entraînement (5a, 5b) peuvent tourner librement autour de l'axe de roue (4) à l'état hors tension de l'entraînement de roue (6).

4. Dispositif d'entraînement selon l'une quelconque des revendications précédentes, dans lequel l'entraînement de roue (6) est configuré sous forme d'entraînement direct sans engrenage, notamment sous forme d'entraînement de moyeu.

5. Dispositif d'entraînement selon l'une quelconque des revendications précédentes, dans lequel la régulation de mouvement (10) présente au moins deux modes de mouvement et est configurée pour
- fonctionner temporairement dans un mode de mouvement forcé, dans lequel le dispositif d'entraînement (1) est déplacé selon un mouvement de consigne prédéfini (MD*), et ce en utilisant toute la puissance d'entraînement ; ET/OU
- fonctionner temporairement dans un mode de mouvement souple dans lequel le dispositif d'entraînement (1) est déplacé de telle sorte que le mouvement réel (MD') du dispositif d'entraînement (1) se rapproche d'un mouvement de consigne prédéfini (MD*), mais uniquement dans les limites d'une valeur maximale prédéfinie pour la puissance d'entraînement ; ET/OU
- fonctionner temporairement dans un mode de mouvement d'évitement, dans lequel le mouvement réel (MD') du dispositif d'entraînement (1) suit une force (F_ex) observée et agissant depuis l'extérieur par un mouvement commandé de la première et/ou de la deuxième roue d'entraînement (5a, 5b), notamment en s'éloignant partiellement ou totalement d'un mouvement de consigne prédéfini (MD*) pour le dispositif d'entraînement (1).

6. Dispositif d'entraînement selon l'une quelconque des revendications précédentes, dans lequel la régulation de mouvement (10) est configurée pour
- entraîner la première et/ou la deuxième roue d'entraînement (5a, 5b) avec une régulation de couple ou avec une régulation de vitesse ; ET/OU
- fixer pour la première et/ou la deuxième roue d'entraînement (5a, 5b) et/ou son entraînement de roue (6) une valeur maximale par laquelle la puissance d'entraînement est limitée, notamment une valeur maximale de courant ou une valeur maximale de couple ou une valeur de vitesse.

7. Dispositif d'entraînement selon l'une quelconque des revendications précédentes, le dispositif d'entraînement (1)
- présentant un système de surveillance de la rotation de direction (11), qui est configuré pour détecter une position de rotation et/ou une vitesse de rotation et/ou une accélération de rotation du support de roue pivotante (2) autour de l'axe de direction vertical (3) ; ET/OU
- présentant un système de surveillance de la rotation de roue (12a, 12b), qui est configuré pour détecter une position de rotation et/ou une vitesse de rotation et/ou une accélération de rotation d'une roue d'entraînement (5a, 5b).

8. Dispositif d'entraînement selon l'une quelconque des revendications précédentes, le dispositif d'entraînement (1) et notamment le support de roue pivotante (2) présentant un palier de basculement (13) qui est configuré pour monter l'axe de roue (4) de manière basculante par rapport à une orientation horizontale, afin de compenser des inégalités de la chaussée par un mouvement relatif de montée ou de descente des roues d'entraînement (5a, 5b), le palier de basculement (13) présentant notamment un mécanisme articulé.

9. Dispositif d'entraînement selon l'une quelconque des revendications précédentes, le dispositif d'entraînement (1) présentant un agencement de bague collectrice (15) qui est configuré pour transmettre des courants de charge et/ou des signaux de données à l'axe de direction (3), l'agencement de bague collectrice (15) comprenant notamment :
- une partie dorsale de bague collectrice (15a), qui est reliée de manière électriquement conductrice à la régulation de mouvement (10) et/ou à au moins un entraînement de roue (6) et qui est agencée de manière solidaire en rotation sur le support de roue pivotante (2), notamment sur la section de bras (2a) ; ET
- une partie distale de bague collectrice (15b), qui est reliée de manière électriquement conductrice à la partie dorsale de bague collectrice (15a) et qui est agencée de manière à pouvoir tourner librement vis-à-vis à l'axe de direction (3) par rapport au support de roue pivotante (2).

10. Plate-forme d'entraînement pour fournir une mobilité omnidirectionnelle entraînée dans le plan, comprenant au moins un dispositif d'entraînement selon l'une quelconque des revendications précédentes, la plate-forme d'entraînement comprenant notamment deux ou plus de deux dispositifs d'entraînement (1).

11. Plate-forme d'entraînement selon la revendication précédente, la plate-forme d'entraînement comprenant une commande de mouvement de plate-forme (32) qui est configurée pour prédéfinir un mouvement de consigne (MD*) pour l'au moins un dispositif d'entraînement (1), et la commande de mouvement de plate-forme (32) étant reliée notamment à deux ou plus de deux dispositifs d'entraînement (1).

12. Plateforme d'entraînement selon l'une quelconque des revendications 10 ou 11 précédentes, la plateforme d'entraînement comprenant au moins une roue auxiliaire (33) .

13. Plate-forme d'entraînement selon l'une quelconque des revendications 10 à 12 précédentes, dans laquelle la commande de mouvement de plate-forme (32) est configurée pour
- détecter et/ou stocker un agencement relatif des un, deux ou plus de deux dispositifs d'entraînement (1) ; ET/OU
- convertir un mouvement de consigne de la plate-forme (MP*) en un ou plusieurs mouvements de consigne (MD*) des un ou plusieurs dispositifs d'entraînement (1) ; ET/OU
- déterminer un mouvement réel de la plate-forme (MP') à partir de paramètres liés à l'au moins un dispositif d'entraînement (1) qui décrivent le mouvement réel (MD') de ce dispositif d'entraînement (1).

14. Plate-forme d'entraînement selon l'une quelconque des revendications 10 à 13 précédentes, dans laquelle la commande de mouvement de plate-forme (32) présente au moins deux modes de mouvement et est configurée pour
- fonctionner temporairement dans un mode de mouvement forcé dans lequel l'au moins un dispositif d'entraînement (1) fonctionne selon un mouvement de consigne prédéfini (MP*) pour la plate-forme, et ce en utilisant toute la puissance d'entraînement ; ET/OU
- fonctionner temporairement dans un mode de mouvement souple dans lequel l'au moins un dispositif d'entraînement (1) fonctionne de telle sorte que le mouvement réel (MP') de la plate-forme se rapproche d'un mouvement de consigne prédéfini (MP*) pour la plate-forme, mais uniquement dans les limites d'une valeur maximale prédéfinie pour la puissance d'entraînement ; ET/OU
- fonctionner temporairement dans un mode de mouvement d'évitement, dans lequel le mouvement réel (MP') de la plateforme (32) suit une force (F_ex) observée et agissant depuis l'extérieur par un mouvement commandé de l'au moins un dispositif d'entraînement (1), notamment en s'éloignant partiellement ou totalement d'un mouvement de consigne (MP*) pour la plateforme (32).

15. Plateforme d'entraînement selon l'une quelconque des revendications 10 à 14 précédentes, dans laquelle la commande de mouvement de plateforme (32) est configurée pour calculer un mouvement de consigne (MD*) de l'au moins un dispositif d'entraînement (1) en fonction de la position relative connue des dispositifs d'entraînement (1) et éventuellement des roues auxiliaires (33), et ce de telle sorte que les mouvements de consigne (MD*) des dispositifs d'entraînement (1) correspondent à un mouvement de consigne (MP*) de la plateforme d'entraînement (30).
